# EUROPÄISCHE PATENTANMELDUNG

(11) **EP 4 671 062 A2**
(43) Veröffentlichungstag der Anmeldung: **31.12.2025**
(21) Anmeldenummer: 25215943.9
(22) Anmeldetag: 10.07.2019
(51) Int. Cl.: B60T 8/40

(54) **BREMSSYSTEM MIT MINDESTENS ZWEI HYDRAULISCHEN KREISEN UND MINDESTENS ZWEI DRUCKVERSORGUNGSEINRICHTUNGEN**

(30) Priorität: 12.02.2019 DE 202019101596 U
(62) Teilanmeldung aus: 19742145.6
(71) Anmelder: IPGATE AG, 8808 Pfäffikon SZ (CH)
(72) Erfinder: LEIBER, Heinz, 71739 Oberriexingen (DE); VAN ZANTEN, Anton, 71254 Ditzingen (DE)
(74) Vertreter: Peterreins Schley

(57) **Zusammenfassung**

Die Erfindung betrifft ein Bremssystem für ein Fahrzeug, umfassend:
zwei hydraulische Bremskreise, jeweils umfassend mindestens eine hydraulisch wirkende Radbremse,
eine erste Druckversorgungseinrichtung, derart angeordnet, um eine oder mehrere der Radbremsen mit Druck zu versorgen, wobei die erste Druckversorgungseinrichtung durch Hin- und Zurückbewegung eines Kolbens Druck in mindestens einem der beiden hydraulischen Bremskreisen aufbauen bzw. abbauen kann,
eine zweite Druckversorgungseinrichtung mit einer Pumpe mit kontinuierlicher Förderleistung in Form einer Kolbenpumpe, Zahnradpumpe oder Exzenterkolbenpumpe, die von einem Elektromotor angetrieben wird und die derart angeordnet ist,
dass sie Druck in mindestens einem der beiden hydraulischen Bremskreisen aufbauen kann,
mindestens eine Ventilanordnung mit Ventilen zur radspezifischen Einstellung der Bremsdrücke und/oder zur Trennung der Radbremsen von oder zum Anschluss der Radbremsen an mindestens eine der ersten oder zweiten Druckversorgungseinrichtungen,
mindestens eine elektronische Steuer- und Regelungseinheit,
eine hydraulische Verbindungsleitung, derart angeordnet, dass sie die beiden Bremskreise verbindet, und
entweder:
ein elektrisches Bremspedal mit einem Wegsimulator und mit Fahreranforderungserkennung unter Verwendung eines oder mehrerer Sensoren und einer Sensor-Steuerelektronikeinheit,
oder:
eine Hauptbremskolben-Zylindereinheit, die durch ein Bremspedal betätigt werden kann, wobei die Hauptbremskolben-Zylindereinheit nur einen Kolben und eine Druckkammer umfasst, wobei die eine Druckkammer mit einem Wegsimulator verbunden ist und über eine Hydraulikleitung mit mindestens einem der beiden hydraulischen Bremskreise verbindbar ist, und wobei mindestens ein schaltbares Ventil der mindestens einen Ventilanordnung derart angeordnet ist, dass die Hydraulikleitung abgesperrt werden kann,
wobei jeder Radbremse ein dediziertes Schaltventil der mindestens einen Ventilanordnung zugeordnet ist, und wobei jeder der beiden hydraulischen Bremskreise eine hydraulische Hauptleitung aufweist, über die die Schaltventile mit jeder der ersten und zweiten Druckversorgungseinrichtungen verbindbar sind,
wobei mindestens ein Auslassventil der mindestens einen Ventilanordnung zur Druckreduzierung durch Ableitung in ein Reservoir vorgesehen ist, und
wobei die erste Druckversorgungseinrichtung, die zweite Druckversorgungseinrichtung und die mindestens eine Ventilanordnung in einem Gehäuse angeordnet sind, wobei das Gehäuse weiterhin an der mindestens einen elektronischen Steuer- und Regelungseinheit befestigt ist,
wobei die mindestens eine elektronische Steuer- und Regelungseinheit einen redundanten Bordnetzanschluss aufweist.

## Beschreibung

Die vorliegende Erfindung betrifft ein Bremssystem mit den Merkmalen des Oberbegriffs des Anspruch 1.

### Stand der Technik

Die Anforderungen, insbesondere Sicherheitsanforderungen beim halbautomatisiertem (HAD) und vollautomatisiertem (FAD) Fahren haben großen Einfluss auf die Systemgestaltung. Diese bedingen redundante und teilredundante Systeme und Komponenten.

Im Vordergrund stehen hier die Druckversorgung, bei der die Bremskraft oder der Druckaufbau auch ohne Fahrerfuß gewährleistet sein muss. Entsprechend muss auch die elektronische Steuerung für diese Funktion ausgebildet sein. Für Level 3, insbesondere Level 4, muss ebenfalls die ABS-Funktion auch im Fehlerfalle gewährleistet sein.

Bei einer redundanten Druckversorgung kann auch ein Systemkonzept ohne Tandem-HZ, nur mit sog. E-Pedal oder für Level 5 nur mit einem Bremsschalter ausgeführt werden. Hierbei sind folgende Patenanmeldungen erwähnenswert: DE 10 2017 222 450 offenbart ein Hydrauliksystem mit nur einem Hauptzylinder, redundanter Druckversorgung, Trennventile zum Hauptzylinder und einen Wegsimulator. Ein Bypassventil zwischen den beiden Bremskreisen ermöglicht bei Ausfall einer Druckversorgung der zweiten Druckversorgung beide Bremskreise zu versorgen. Dieses stromlos offene Ventil ist extrem sicherheitsrelevant, da bei Ausfall des Ventils und z. B. Bremskreisausfall, ein Totalausfall der Bremse die Folge sein kann. Außerdem ist der Ventilaufwand sehr hoch.

Die DE 10 2017 222 435 und DE 10 2016 225 537 zeigen ein ähnliches Konzept, jedoch mit E-Pedal, reduzierter Druckversorgung und Bypassventil. Alle Systeme verwenden für die ABS-Funktion beim Druckabbau ein sogenanntes Auslassventil. Gerät beim Öffnen des Ventils ein Schmutzpartikel in dessen Ventilsitz, so kann dies einen Bremskreisausfall bei der nächsten Bremsung bewirken.

DE 10 2017 207 954 zeigt ein Systemkonzept mit redundanter Druckversorgung und ohne Auslassventile für die ABS-Druckregelung. Hier wird das sogenannte Multiplex-Verfahren, welches in DE 102005055751 beschrieben ist, eingesetzt, bei dem die Drucksteuerung für ABS von der Druckversorgung durch Volumenmessung und Druckinformation erfolgt. Hierbei werden auch die Schaltventile zur Drucksteuerung redundant verwendet. Ein Sicherheitsrisiko entsteht, wenn die Kolbendichtung oder ein Rückschlagventil zum Vorratsbehälter ausfällt und das Schaltventil durch Schmutzpartikel undicht ist, was ebenso einen Totalausfall der Bremse zur Folge hat.

Oben genannte Beispiele zeigen das Problem der schlafenden Fehler, die bei Doppelfehlern kritisch werden, wenn diese nicht vor dem Bremsmanöver von der Diagnose erfasst werden können.

### Aufgabe der Erfindung

Die Erfindung stellt sich die Aufgabe, ein kostengünstiges Hydrauliksystem mit zwei Bremskreisen bereitzustellen.

### Lösung der Aufgabe

Diese Aufgabe wir mit einem Bremssystem mit den Merkmalen des Anspruchs 1 erfindungsgemäß gelöst. Weitere vorteilhafte Ausgestaltungen des Hydrauliksystems gemäß Anspruch 1 ergeben sich durch die Merkmale der Unteransprüche.

### Vorteile der Erfindung

Erfindungsgemäß sind die erste und die zweite Druckversorgungseinrichtung auf unterschiedlich hohe Maximaldrücke bzw. Druckniveaus und/oder unterschiedlich große Fördervolumina ausgelegt.

Sofern die eine Druckversorgungseinrichtung einen elektromotorisch angetriebenen Plunger-Kolben und die andere Druckversorgungseinrichtung z.B. eine einfache Kolben- oder Zahnradpumpe ist, so ist zur Kostenersparnis ein Downsizing der Druckversorgungseinrichtung möglich, indem der Motor der Plungerpumpe nur für den Blockierdruck bei hohem µ, z. B. 120 bar, und die einfache Kolben- oder Zahnradpumpe auf z. B. 200 bar ausgelegt wird. Darüber hinaus kann in einer weiteren Ausgestaltung auch optional die Plungerpumpe mit einem bürstenlosen und die Kolbenpumpe, wie bei ABS / ESP, mit einem Bürstenmotor kombiniert werden.

Beim Vorsehen von zwei Druckversorgungseinrichtungen kann über eine Druckversorgung ein Druck aufgebaut werden, während gleichzeitig über die zweite Druckversorgung der Druck abgebaut wird. Zudem können beide Druckversorgungseinrichtungen für einen schnellen Druckaufbau über die beiden Verbindungsventile parallel bzw. zusammengeschaltet werden. Hierdurch ist vorteilhaft ein Downsizing der Antriebe möglich. Auch kann damit vorteilhaft der Druckunterschied durch den Staudruck der Verbindungsventile reduziert werden. Der Plungerkolben kann vorteilhaft ebenfalls redundante Dichtungen aufweisen, die auch auf Dichtheit geprüft werden können. Ebenso kann die Druckversorgungseinrichtung mit einem zweiten überwachbaren Rückschlagventil versehen werden. Anstelle von zwei Druckversorgungen kann bei der erfindungsgemäßen Ventilanordnung zur Verbindung der beiden Bremskreise auch eine Plungerpumpe mit einem elektrisch redundanten Motor mit 2 x 3-Phasenwicklung eingesetzt werden. Auch kann dieser Motor mit einem Antrieb und Doppelhubkolben kombiniert werden.

Durch das Vorsehen von zwei in Reihe geschalteter Verbindungsschaltventile zur Verbindung zweier Bremskreise des erfindungsgemäßen Bremssystems wird vorteilhaft eine hohe Fehlersicherheit erlangt.

Die Erfindung sieht dabei in einer ersten Alternative zur Verbesserung der Fehlersicherheit vor, dass die beiden stromlos offenen Verbindungsschaltventile, welche insbesondere als 2/2-Wegeventile ausgebildet sind, derart mit ihrem Ventilanschlüssen im Bremssystem angeordnet sein, dass sie im stromlosen Zustand unterstützt durch einen evtl. in der jeweiligen Hydraulikhauptleitung bzw. dem Bremskreis herrschenden Druck öffnen. Dies kann insbesondere dadurch erreicht werden, dass der dem Ventilsitz zugeordnete Ventilanschluss eines Verbindungsschaltventils mit einer Hydraulikhauptleitung in hydraulischer Verbindung ist, so dass der dort herrschende Druck das Ventilstellglied weg vom Ventilsitz drückt. Alternativ oder in Kombination zu ersten Alternative kann der innere Abschnitt der Verbindungsleitung, welcher die beiden Anschlüsse der Verbindungsschaltventile direkt miteinander verbindet über eine weitere hydraulische Leitung mit dem Druckraum eines Hauptbremszylinders in Verbindung sein, wobei mindestens ein Ventil in der weiteren Hydraulikleitung zu deren wahlweisen Absperrung angeordnet ist. Hierdurch ist es vorteilhaft möglich, dass im Fehlerfalle über den Hauptbremszylinder, welcher z.B. mittels eines Bremspedals betätigbar ist, ein Druck in einem oder beiden Bremskreisen aufbaubar ist.

So kann das erfindungsgemäße Hydrauliksystem je Bremskreis eine Druckversorgungseinrichtung aufweisen. Es ist jedoch ebenso möglich, dass lediglich eine einzige Druckversorgungseinrichtung für beide Bremskreise vorgesehen ist, ohne dass hierdurch die Funktionsfähigkeit des Hydrauliksystems wesentlich fehleranfälliger wird. Durch das Hintereinanderschalten der beiden Verbindungsventile wird eine Redundanz geschaffen. Zusätzlich können die Ventile in der Dichtheit und Schaltfunktion geprüft werden. Damit wird eine extrem hohe Fehlersicherheit erzeugt.

Der Hauptbremszylinder mit Wegsimulator sollte ebenfalls fehlersicher sein, was z.B. durch redundante Dichtungen, deren Ausfall überwacht werden kann, erfolgen kann. Hierdurch ist es vorteilhaft möglich, auf einen aufwendigen, großen und teuren Tandem-Hauptbremszylinder zu verzichten und lediglich einen Hauptbremszylinder mit einer Druckkammer einzusetzen.

Sofern das erfindungsgemäße Hydrauliksystem als Bremssystem dient, so kann die Pedalbewegung über zwei redundante Pedalwegsensoren oder zumindest den Mastersensor nochmals redundant gemessen werden. Vorzugsweise können die Pedalwegsensoren mit einem Kraft-Weg-Element, wie es beispielsweise aus WO/2012/059175 A1 bekannt ist, zur Fehlererkennung, z. B. des Wegsimulators, gekoppelt werden.

Das Verbindungsventil vom Hauptbremszylinder zu den Bremskreisen und der Druckversorgung ist ebenso sicherheitsrelevant, da ein Ausfall eine Verbindung zur Druckversorgung ermöglicht, was auf das Pedal wirkt und die Pedalcharakteristik verändert. Auch diese Verbindung ist durch die o. g. Ventilanordnung zur Verbindung der beiden Bremskreise abgesichert, da hierdurch eine redundante Reihenschaltung von zwei Ventilen zwischen jeder Druckversorgung und dem Hauptbremszylinder gegeben ist, so dass bei Ausfall eines der Ventile noch immer keine unerwünschte Rückwirkung auf das Pedal entsteht.

Vorteilhaft kann das Multiplex-Verfahren (MUX), d.h. das Einstellen bzw. Einregeln des Druckaufbaus und -abbaus in einer Radbremse über ein der Radbremse zugeordnetes bzw. unmittelbar vorgeschaltetes Schaltventil erfolgen, in dem die Druckversorgung bei geöffnetem Schaltventil den Druck in der Radbremse einstellt. Zusätzliche Auslassventile für die Radbremsen, wie sie beim klassischen ABS-System verwendet werden, können hier vorteilhaft entfallen. Es ist jedoch auch möglich, ein Auslassventil bzw. Abführventil je Bremskreis oder auch nur ein Abführventil für beide Bremskreise für den Druckabbau vorzusehen. Sofern zwei redundante Druckversorgungen, z. B. mit Plunger und Kolbenpumpe, vorgesehen sind, so kann das o.g. Multiplex-Verfahren mit beiden Druckversorgungseinrichtungen gleichzeitig oder getrennt in einem oder beiden Bremskreisen erfolgen.

Beim bekannten MUX-Verfahren wird mit einer zentralen elektromotorischen Kolbeneinheit Druck erzeugt und damit im Zusammenwirken mit einem Ventil pro Rad die Druckmodulation Pauf und Pab für ABS erzeugt. Hierbei müssen vier Radzylinder = Kanäle bedient werden. Über eine Druck-Volumen-Kennlinie kann die vom Kolben erzeugte Volumenänderung den entsprechenden Raddruck / -änderung erzeugen. Hierbei kann nicht gleichzeitig Pauf und Pab im System erzeugt werden. Der Pab soll jedoch mit nur kurzer Verzögerung erfolgen, wobei sich die Umschaltzeit nachteilig auf die Drückänderung Pauf und Pab auswirkt.

Beim Vorsehen von zwei Druckversorgungseinrichtungen müssen diese jeweils nur für die in dem ihnen zugeordneten Bremskreis bzw. Bremskreis vorhandenen Komponenten, insbesondere Radbremsen, die Druckregelung vornehmen. D.h. das Multiplexverfahren muss lediglich für zwei Kanäle bzw. Radbremsen ausgelegt sein. Nur in einem Fehlerfalle muss das MUX-Verfahren über die Verbindung der beiden Bremskreise von einer Druckversorgungseinrichtung für alle Radbremsen durchgeführt werden.

Sofern noch mindestens ein Abführventil für den Druckabbau vorgesehen ist, so kann das erfindungsgemäße Hydrauliksystem auch nur mit einer einzigen Druckversorgungseinrichtung betrieben werden, da dann ein gleichzeitiger Druckaufbau in einem Bremskreis mittels der Druckversorgungseinrichtung und ein Druckabbau in dem anderen Bremskreis über das Abführventil hin zu einem Vorratsbehältnis erfolgen kann.

Die elektronische Steuer- und Regeleinrichtung kann voll- oder teilredundant auch mit entsprechendem Bordnetzanschluss für die verschiedenen Funktionen ausgelegt werden. Insbesondere kann die Ansteuerung der Ventile redundant mit Trennschalter der einzelnen Ventiltreiber ausgelegt werden, damit in jedem Fehlerfall, z. B. Kurzschluss eines Treibers, eine fehlersichere Ansteuerung möglich ist.

Der Niveausensor im Vorratsbehälter sollte das Niveau stetig messen, damit frühzeitig durch Niveauänderung ein Leck erkannt wird. Auch dieser Sensor kann redundant ausgeführt werden, was leicht zu realisieren ist, wenn die elektronische Steuer- und Regeleinrichtung am Vorratsbehälter anliegt und in die Sensorelemente auf der Leiterplatte angeordnet werden können.

Die Fehleranalyse zeigt, dass vorteilhaft Doppelfehler ohne Totalausfall des Hydrauliksystems bzw. der Bremse beherrscht werden, teilweise sogar Dreifachfehler. Dabei ist weitestgehend die Diagnose der Einzelfehler möglich, um schlafende Fehler zu erkennen.

Bei redundant ausgebildeter Druckversorgungseinrichtung ist die Ausfallwahrscheinlichkeit der gesamten Druckversorgung äußerst gering und eigentlich nur bei Bordnetzausfall relevant. Damit kann auf einen redundanten Tandem-Hauptbremszylinder (THZ) verzichtet werden. Trotzdem wird beim erfindungsgemäßen Konzept ein Hauptbremszylinder mit überprüfbaren redundanten Dichtungen und nur einem Druckraum vorgeschlagen, der hierdurch eine erhöhte Fehlersicherheit aufweist, und somit gegenüber einem Tandem-Hauptbremszylinder ebenbürtig ist.

Mit dieser fehlersicheren Ventilanordnung kann die Anzahl der Ventile um ca. 40 % reduziert werden im Vergleich zu einer Ventilanordnung bekannter integrierter 1-Box-Systeme, welche mit einem höheren Ventilaufwand noch nicht fehlersicherer sind. Auch sind nur 50 % der Ventilvarianten notwendig im Vergleich zu o. g. 1-Box-Systemen.

Bei einer der beiden Druckversorgungseinrichtungen bietet es sich an, die Pumpe mit Motor von ABS und ESP zu verwenden, was sowohl Bauraum- als auch Kostenvorteile hat.

Bekanntlich kann die Parkierbremse EPB beim Feststellen der Bremse unterstützt werden, um den Elektromotor der Parkierbremse zu verkleinern. Mit den redundanten Druckversorgungseinrichtungen ist dies noch effektiver und sicherer.

Mit dem erfindungsgemäßen Hydrauliksystem ist vorteilhaft sichergestellt, dass die Bremswirkung, ABS-Funktion und die Pedalcharakteristik durch redundant ausgelegte Komponenten bzw. Baugruppen sowie Ventilschaltungen sichergestellt und hinreichend ausfallsicher ist.

Nachfolgend werden anhand von Zeichnungen verschiedene mögliche Ausführungsformen der Erfindung näher erläutert.

Es zeigen:
- Fig. 1: Eine erste mögliche Ausführungsform eines erfindungsgemäßen Hydrauliksystems mit einer fehlersicheren Ventilanordnung zur Verbindung beider Bremskreise, einem Hauptzylinder mit Betätigungseinrichtung sowie zwei Druckversorgungseinrichtungen mit elektronischer Steuer- und Regeleinrichtung als sogenannte Integrierte 1-Box-Anlage;
- Fig. 1a:: zeigt eine Variante einer möglichen Ventilschaltung für die Verbindung der beiden Bremskreise;
- Fig. 1b:: eine alternative Ausführungsform mit anderem Anschluss der zweiten Druckversorgungseinrichtung;
- Fig. 1c:: zeigt die Funktion des Bremssystems mit beiden Druckversorgungseinrichtungen;
- Fig. 1d:: zeigt die Funktion bei Ausfall in einem Bremskreis und/oder des Schaltventils einer Radbremse;
- Fig. 1e:: zeigt die Funktion des Hydrauliksystems bei Ausfall beider Druckversorgungseinrichtungen;
- Fig. 2:: zeigt das System mit Hauptzylinder als separates Modul;
- Fig. 3:: Hydrauliksystem mit nur einer Druckversorgung, die jedoch eine redundante Motorsteuerung aufweist;
- Fig. 3a:: Hydrauliksystem gemäß Figur 3, jedoch mit einer Druckversorgungseinrichtung mit Doppelhubkolben;
- Fig. 4:: eine Ventilanordnung für einen E/X-Boost in Kombination mit ESP;
- Fig. 5:: ein Bremssystem mit einem E-Pedal.

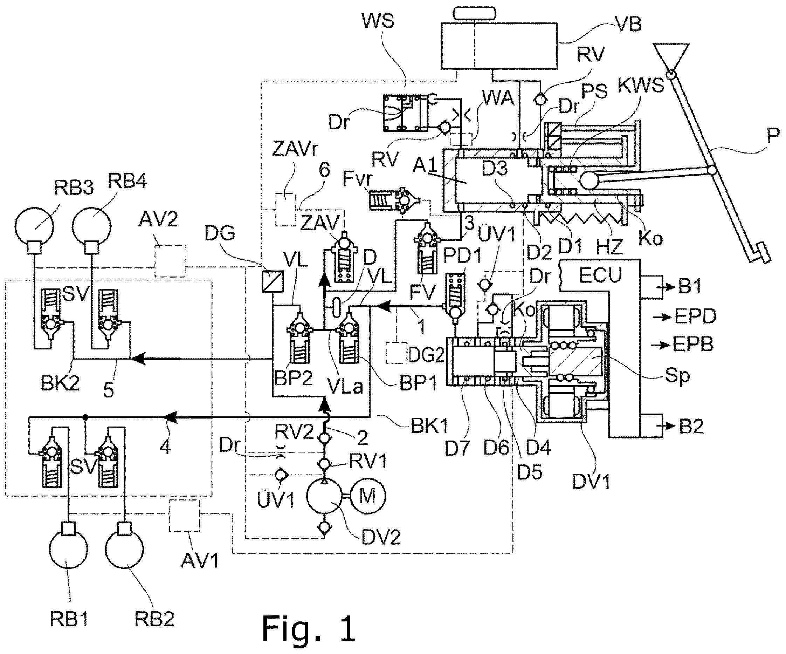

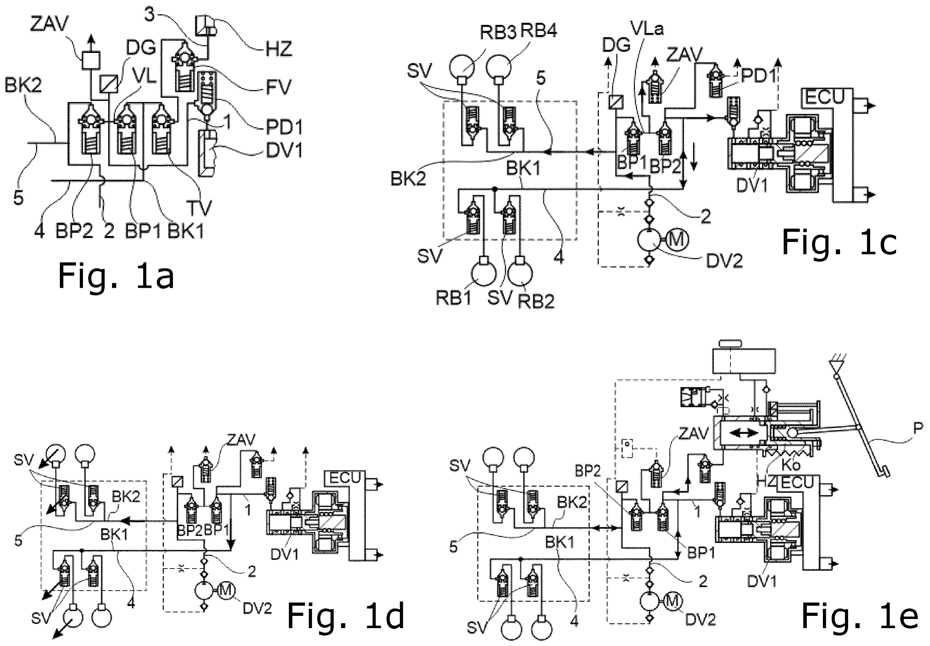

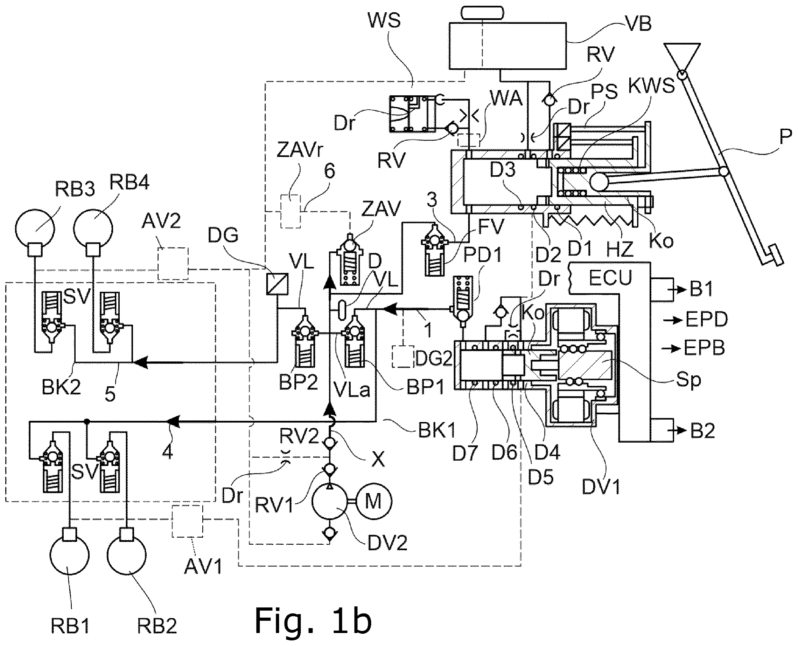

Die Figur 1 zeigt die Grundelemente eines regelbaren Bremssystems bestehend aus Hauptbremszylinder HZ mit Wegsimulator WS und Vorratsbehältnis VB, zwei Druckversorgungseinrichtungen DV1 und DV2, wobei die Druckversorgungseinrichtung DV1 eine elektromotorischer Kolbensteuerung und die zweite Druckversorgungseinrichtung DV2 eine einfache 1-kreisige Kolben- oder Zahnradpumpe aufweist. Beide wirken zusammen mit einer Ventilschaltung auf die Radbremszylinder RZ, welche den geregelten Raddruck, z. B. bei ABS, auf die Bremse übertragen. Dies entspricht dem Stand der Technik. Das erfindungsgemäße Hydrauliksystem soll jedoch eine hohe Fehlersicherheit für halbautomatisches (HAD) oder vollautomatisches Fahren (FAD) aufweisen.

Hierzu sollten alle ausfallrelevanten Komponenten berücksichtigt werden, wie z. B. Ventile, Sensoren, Dichtungen, Motore, Bremskreise. Vorteilhaft sollten daher folgende Komponenten bzw. Hydraulikverbindungen ausfallsicher ausgebildet sein:
(1) Verbindung von der für den ersten Bremskreis vorgesehenen Druckversorgungseinrichtung DV1 zum zweiten Bremskreis BK2;
(2) Verbindung von der für den ersten Bremskreis vorgesehenen Druckversorgungseinrichtung DV2 zum ersten Bremskreis BK 1;
(3) Verbindung von dem Druckraum des Hauptbremszylinders HZ über das Ventil FV hin zu den Bremskreisen BK 1, BK2 über die Ventile BP1 und BP2;
(4) Verbindung von Ventil PD1 und Ventil BD1 zu den Radbremszylindern RZ über die jeweiligen den Radbremsen zugeordneten Schaltventile SV;
(5) Verbindung von Ventil BD2 zu den Radbremszylindern RZ über die jeweiligen den Radbremsen zugeordneten Schaltventile SV;
(6) Verbindung von einem Bremskreis BK1, BK2 hin zum Vorratsbehältnis VB;
(7) Verbindungen zwischen Bremskreisen BK1, BK2 hin zu den Radbremszylindern RZ.

Diese hydraulischen Verbindungen mit möglichen Ausfallfehlern der einzelnen Komponenten werden im Folgenden beschrieben.

Die Druckversorgungseinrichtung DV1 wirkt vom Bremskreis BK1 in den Bremskreis BK2 über die Hydraulikleitungen Leitung 1, 2 und 5 über die Schaltventile SV zu den Radbremsen RB. Im Stand der Technik wird hierzu lediglich ein einziges Bypassventil eingesetzt. Ein Ventilausfall kann hier einen Totalausfall der Bremse bewirken, wenn noch ein schlafender Fehler bei einem weiteren Ventil hinzukommt. Die Erfindung sieht daher zwei redundante Ventile BP1 und BP2 vor, um die Verbindung hin zum Bremskreis BK2 von der ersten Druckversorgungseinrichtung DV1 zu ermöglichen. Schlafende Fehler der Ventile BP1 und BP2 werden vom Druckgeber erkannt, indem bei Druckänderung die Ventile kurzgeschlossen werden. In dieser Phase muss der Druck konstant bleiben. Bei Ausfall der ersten Druckversorgungseinrichtung DV1, z.B. bei Ausfall einer Kolbendichtung, wird eine Rückwirkung auf Bremskreis BK2 über die drei redundanten Ventile BP1, BP2 und PD1 verhindert. Die Ventile sind vorzugsweise stromlos offene Ventile, damit bei Ausfall der Druckversorgungseinrichtungen DV1, DV2 der Hauptbremszylinder HZ auf beide Bremskreise BK1 und BK2 wirken kann. Wird Druck über das Öffnen der Ventile ZAV oder FV reduziert, so öffnen die beiden Verbindungsschaltventile ohne eigene elektrische Ansteuerung durch den wirkenden Differenzdruck selbstständig.

Entsprechend wirkt die Druckversorgungseinrichtung DV2 in dem zweiten Bremskreis BK2 über die Hydraulikleitungen 2 und 5 und über die Ventile BP2 und BP1 in die Hydraulikleitung 4 und von dort über die Schaltventile SV zu den Radzylindern RZ. Bei Ausfall des BK in Radbremsen RB sind durch Diagnose zuvor die Ventile SV, BP1 und BP2 geschlossen und verhindern einen Ausfall der Druckversorgung. Hierbei sind alle Ventile z. B. SV, BP1, BP2 sicherheitskritisch als schlafende Fehler zu betrachten, da das die Ventile durchströmende Hydraulikmedium Schmutzpartikel enthält, welche ein Schließen des Ventils verhindern können und die Ventile somit undicht sind. Im vorliegenden Fall kann z.B. bei Ausfall eines Schaltventils SV zwar der eine Bremskreis ausfallen. Der andere Bremskreis ist jedoch durch die Zwischenschaltung der beiden Ventile BP1 und BP2 abgesichert. Es müsste hier ein Dreifachfehler vorliegen, d.h. beide Ventile BP1 und BP2 müssten zusätzlich ausfallen, damit ein Totalausfall vorliegt. Zumindest ein Bremskreis ist somit sicher gegen Doppelfehler geschützt und verhindert einen Totalausfall der Bremse. Sicherheit gegen Doppelfehler, wenn schlafende Fehler auftreten können, ist ein entscheidendes Sicherheitsmerkmal für HAD und FAD. Auch Aufrechterhaltung der Druckversorgung oder des Bremskraftverstärkers bei Bremskreisausfall zählt dazu.

Die Druckversorgungseinrichtung DV2 kann dabei bei schnellen Druckaufbau oder Druckaufbau über 120 bar die andere Druckversorgungseinrichtung DV1 unterstützen und/oder die Druckversorgung bei Fading durch kontinuierliche Förderung und/oder für die ABS-Funktion vornehmen und/oder bei Ausfall der anderen Druckversorgung DV1 dessen Funktion mit übernehmen.

Ebenso ist es möglich, dass die Druckversorgungseinrichtung DV1 den Druckaufbau für Druckbereiche kleiner gleich 120 bar und für die ABS-Funktion übernimmt. Bei Ausfall der Druckversorgungseinrichtung DV2 steht, sofern die Druckversorgungseinrichtung DV2 nur auf einen maximalen Druck von 120 bar ausgelegt ist, nur dieser maximale Druck von 120 bar für beide Bremskreise zur Verfügung.

Bei geschlossenen Verbindungsventilen BP1 und/oder BP2 können die beiden Druckversorgungseinrichtungen DV1 und DV2 in ihren Bremskreisen BK1 und BK2 den Druck unabhängig voneinander einregeln bzw. -stellen.

Die Pedalbewegung wird über redundante Pedalwegsensoren (PS) gemessen, die zugleich auf ein KWS-Messelement nach WO2012/059175 A1 wirken. Mit dem Signal der Pedalwegsensoren wird die Druckversorgungseinrichtung DV1 angesteuert, wobei die Kolbensteuerung den Volumenfluss in der Hydraulikhauptleitung 1 in dem Bremskreis BK1 und über die redundanten BP1- und BP2-Ventile in den Bremskreis BK2 bewirkt. Die Druckversorgungseinrichtung DV1 kann so ausgelegt werden, dass sie nur bis zum Blockierdruck z. B. 120 bar wirkt. Höhere Drücke liefert dann die Druckversorgungseinrichtung DV2, welche Volumen in den Bremskreis BK2 und über die redundanten Ventile BP1 und BP2 in BK1 fördert. Dabei kann die Druckversorgungseinrichtung DV2 eine kontinuierlich fördernde Pumpe sein. Ist das Bremssystem schlecht entlüftet oder entsteht Dampfblasenentwicklung mit mehr Volumenbedarf, so wird dies über die bekannte Druckvolumenkennlinie (p-v-Kennlinie) erfasst, was zur Folge hat, dass schon bei kleineren Drücken die Druckversorgungseinrichtung DV2 einsetzt. Zur Pedalbetätigung ist noch zu ergänzen, dass diese den Kolben Ko bewegt, welcher über den pedalkraftproportionalen Druck auf den bekannten Wegsimulator WS wirkt und damit die Pedalcharakteristik bestimmt. Der Wegsimulator WS kann üblicherweise über ein Ventil abgeschaltet werden, insbesondere in der Rückfallebene bei ausgefallenen Druckversorgungseinrichtungen. Bei redundanter Druckversorgungseinrichtungen ist dies aufgrund der sehr geringen Ausfallwahrscheinlichkeit nicht mehr relevant.

Über die Leitung 3 kann der Hauptbremszylinder HZ mit den Bremskreisen BK1 oder BK2 verbunden sein, wobei in der Leitung 3 das Ventil FV zum Verschließen derselben angeordnet ist. Diese Verbindung ist nur in der Rückfallebene wirksam. Sofern die Leitung mit der Verbindungsleitung der beiden Schaltventile BP1 und BP2 verbunden ist, bilden die beiden Ventile BP1 und BP2 eine weitere Redundanz. Eine übliche Verbindung vom FV direkt in einen der beiden Bremskreise BK1, BK2 hätte bei undichtem Ventil FV zur Folge, dass der Bremskreis und damit die Druckversorgung auf den HZ-Kolben wirkt, was herkömmlich zum Abschalten der Druckversorgung führt.

Auf das Ventil FV wirken verschiedene Drücke bzw. Druckniveaus vom Hauptbremszylinder und von den Bremskreisen BK1 und BK2. Dies kann dazu im schlimmsten Fall dazu führen, z.B. bei Ausfall des Bordnetzes oder der Steuer- und Regeleinheit ECU, dass eine ungünstige Druckdifferenz am geschlossenen Ventil FV herrscht und das Ventil FV nicht öffnen kann, so dass ein Druckabbau P_{ab} nicht möglich ist. Um dies zu verhindern ist dem Ventil FV ein weiteres Schaltventil FVr parallelgeschaltet, wobei die Aus- und Eingänge der Ventile FV und FVr vertauscht an die Leitung 3 angeschlossen sind, so dass bei beliebigen Druckdifferenzen sichergestellt ist, dass zumindest eines der beiden Ventile FV, FVr durch den Differenzdruck automatisch, d.h. auch ohne Bestromung öffnet. Zudem wird der Staudruck an den Ventilen hierdurch vorteilhaft verringert.

Bei Ausfall eines Bremskreises im Radzylinder wird herkömmlich das entsprechende Einlassventil EV oder Schaltventil SV geschlossen, damit wird der ausgefallene Radkreis eliminiert. Ein undichtes EV/SV (schlafender Fehler) bewirkt den Ausfall des Bremskreises oder der gesamten Druckversorgung. Auch hier ist durch die Ventile BP2 und BP1 eine zusätzliche Sicherheit gegeben, so dass die Druckversorgung nicht ausfällt. Ein Ausfall des Bremskreises BK1 aufgrund eines nicht funktionierenden Schaltventils SV bedeutet einen Ausfall der Druckversorgung DV1, wodurch die Druckversorgung aller noch funktionstüchtigen Radbremsen über die andere Druckversorgungseinrichtung DV2 erfolgt.

Ein weiterer Ausfall kann durch einen Fehler des Rückschlagventils RV1 im zweiten Bremskreis entstehen. Der Ausfall der Druckversorgung DV2 kann hier durch ein redundantes RV2 verhindert werden. Eine Drossel Dr nach dem RV2 mit kleinem Druckfluss ermöglicht die Diagnose z. B. über Druckabfall.

Für die ABS-Regelung oder zur Druckreduzierung mit der zweiten Druckversorgungseinrichtung DV2 ist ein zentrales Auslassventil ZAV notwendig. Der Volumenfluss geht dabei zusätzlich über die Ventile BP1 oder BP2, so dass ein undichtes ZAV nicht kritisch für den Normalbetrieb ist, da bei Ausfall des zentralen Abführventils ZAV die Drucksteuerung über Druckversorgungseinrichtungen DV1 und DV2 erfolgt. Außerdem wird der Fehler, auch schlafend, von ZAV gleich durch Druckänderung oder erhöhte Volumenförderung der Druckversorgungseinrichtung DV1 erkannt. Bei normaler Bremsung bis ca. 120 bar wirkt die Druckversorgung DV über offene Ventile BP1 und BP2 in beide BK. Für extreme Sicherheitsanforderungen kann auch ein red. Abführventil ZAVr in der Leitung zum Vorratsbehälter VB eingebaut werden.

Eine Druckreduzierung ohne Betätigung der Druckversorgungseinrichtung DV1, ist durch Ansteuerung des zentralen Auslassventils ZAV möglich. Bei geöffneten Ventile BP1 und BP2 kann, bei geöffneten Ventilen SV, durch Öffnung des zentralen Auslassventils ZAV der Druck in den Radzylindern RB1, RB2, RB3 und RB4 reduziert werden. Dabei ist es vorteilhaft, die Förderleistung der Druckversorgungseinrichtung DV2 zu stoppen oder zu reduzieren. Die zeitliche Druckabbaugradienten in den Radzylindern RB1, RB2, RB2 und RB4 werden dabei unter anderem von der Geometrie des zentralen Auslassventils ZAV bestimmt. Eine Möglichkeit, diese Druckabbaugradienten zu beeinflussen, bietet die Pulsweitenmodulation, PWM, der elektrischen Spannung in der Ansteuerung der Ventile BP1 und BP2. Sollen die Druckabbaugradienten in den Radzylinder RB1 und RB2 kleiner sein als bei voll geöffnetem Ventil BP1, so wird, bei geöffnetem zentralen Auslassventil ZAV, das Ventil BP1 mit PWM so angesteuert, dass die Druckabbaugradienten denen der Sollwerte entsprechen oder nahekommen. Dabei kann mit dem Drucksensor DG2 die Regelgüte der Druckreduzierung verbessert werden. Alternativ können durch PWM Ansteuerung der Ventile SV in BK1, bei geöffneten Ventilen BP1 und ZAV, die Druckabbaugradienten in den Radzylindern RB1 und RB2 individuell eingestellt werden. Ähnliches gilt für die Druckabbaugradienten in den Radzylindern RB3 und RB4. Sollen die Druckabbaugradienten in den Radzylinder RB3 und RB4 kleiner sein als bei voll geöffnetem Ventil BP2, so wird, bei geöffnetem zentralen Auslassventil ZAV, das Ventil BP2 mit PWM der elektrischen Spannung so angesteuert, dass die Druckabbaugradienten, denen der Sollwerte entsprechen oder nahekommen. Dabei kann mit dem Drucksensor DG die Regelgüte der Druckreduzierung verbessert werden. Alternativ können durch PWM Ansteuerung der Ventile SV in BK2, bei geöffneten Ventilen BP2 und ZAV, die Druckabbaugradienten in den Radzylindern RB3 und RB4 individuell eingestellt werden. Damit sind sehr komfortable und geräuscharme Bremsungen des Fahrzeugs, auch ohne Betätigung der Druckversorgungseinrichtung DV1 realisierbar. Sind radindividuelle Druckabbaugradienten in den Radzylindern erforderlich, z.B. bei Torque Vectoring im Rekuperationsbetrieb, dann können diese, bei geöffnetem zentralen Auslassventil ZAV, im bekannten Multiplexverfahren mit der PWM-Ansteuerung der Ventile BP1 und BP2 und durch Schaltung der Ventile SV realisiert werden. Eine weitere Möglichkeit in der Realisierung dieser radindividuellen Druckabbaugradienten bietet die PWM der SV-Ansteuerung bei offenen Ventilen BP1, BP2 und ZAV. Damit können simultane Druckabbauten mit individuellen Druckabbaugradienten für jeden Radzylinder RB1, RB2, RB3 und RB4 durchgeführt werden. Alternativ zu den PWM-Ansteuerungen der Ventile können auch Stromregelungen für die Ventilansteuerungen eingesetzt werden.

Ausfallursachen im Hauptbremszylinder HZ und Wegsimulator WS sind normalerweise die Dichtungen. Beim Hauptbremszylinder HZ kann eine zusätzliche Dichtung D3 mit Drossel in der Rücklaufleitung zum Vorratsbehälter VB eingesetzt werden, um den Ausfall einer Dichtung frühzeitig diagnostizieren zu können. Damit ist eine Undichtheit über eine kleine zusätzliche Pedalbewegung über die Pedalhubsensoren erkennbar. Zu berücksichtigen ist die geringe Beanspruchung bei HAD und FAD.

Zur Diagnose der Dichtungen ist bei vielen Systemen in der Rücklaufleitung ein stromlos offenes Magnetventil eingeschaltet, welches zur Diagnose geschlossen wird. Hierbei wird von der Druckversorgungseinrichtung DV1 über die Ventile PD1, BP1 und EV Druck in den Hauptbremszylinder HZ geleitet. Die Diagnose erfolgt über Druckänderung bei konstanter Kolbenposition oder Änderung der Kolbenposition bei konstantem Druck. Als Alternative kann hier auch eine Kombination aus Drossel- und Rückschlagventil kostensparend eingesetzt werden. Die Drossel ist so bemessen, dass ein Leckfluss durch die Dichtung nur geringfügig zur Pedalverlagerung innerhalb einer normalen Bremszeit von ca. 10 sec. führt.

Dieselbe Lösung wird auch beim WS-Kolben mit redundanter Dichtung eingesetzt, Diagnose wie o. g. bei D3 über die Pedalbewegung. Hinzu kommt noch, dass eine Steuerung der Bremskraftverstärkung auch bei diesen ausgefallenen Dichtungen noch möglich ist, allerdings mit veränderter Pedalcharakteristik. Auch hier gilt eine extrem kleine Ausfallrate für den Ausfall von zwei Dichtungen fast im Bereich <10⁻¹⁰/Jahr. Auch die Druckversorgungseinrichtung DV1 kann mit redundanten Dichtungen, wie beim Hauptbremszylinder HZ zuvor beschrieben, ausgerüstet werden mit D6 mit Drossel zwischen D6 und D5. Wenn das Saugventil direkt mit dem Anschluss an PD1 verbunden wird, dann setzt das Ansaugen unmittelbar beim Rückhub des Kolbens ein, mit dem Vorteil, dass auch bei tiefen Temperaturen eine hohe Saugleistung gegeben ist. Ein Ausfall, Undichtheit des SV bewirkt im Grenzfall Ausfall der DV. Ein Kompromiss liegt in dem Anschluss des SV bei ca. 60 % des Hubes. Damit ist 40% des Hubes ohne Auswirkung eines undichten SV möglich und zugleich eine Saugwirkung im normalen Temperaturbereich. Mit kleiner o. g. Einschränkung ist durch Redundanz die Volumenförderung des Kolbens gesichert. Weiterhin kann der Motor über eine redundante 2x3-Phasen-Wicklung angesteuert werden, so dass die DV nur durch blockierendes KGT ausfallen.

Die ABS-Funktion über Multiplexbetrieb MUX und der Druckversorgungseinrichtung DV1 erfolgt wie in WO 2006/111393 A1 beschrieben. Erweiterte MUX-Funktionen ergeben sich durch ein zentrales Abführventil ZAV. Ist beim Druckaufbau p_{auf} im Bremskreis BK1 gleichzeitig ein Druckabbau p_{ab} im anderen Bremskreis BK2 notwendig, so erfolgt dieser über das Abführventil zentrale ZAV und gleichzeitig geschlossenem Ventil BP1. Dadurch ist das Multiplexsystem MUX nur durch zwei Radbremsen RB1, RB2 im Bremskreis BK1 belastet, d. h. es kann nicht zugleich ein Druckaufbau Pauf und Druckabbau Pab in den Radbremsen RB1 und RB2 des Bremskreises BK1 erfolgen. Alternativ kann auch ein Abführventil AV1, AV2 im jeweiligen Bremskreis zum Druckabbau p_{ab} zur Entlastung des MUX verwendet werden. Dabei kann das Abführventil AV1, AV2 entweder zwischen dem Schaltventil SV und einem Verbindungsschaltventil BP1, BP2 oder aber zwischen der Radbremse und dem zugehörigen Schaltventil SV angeordnet bzw. angeschlossen werden, so dass ein direkter Druckabbau Pab über das Abführventil hin zu einem Vorratsbehälter VB erfolgen kann. Dies ist insbesondere zum Druckabbau Pab in den Vorderrädern sinnvoll. Das zentrale Abführventil ZAV wird bei dieser Alternative nicht benötigt.

Die ABS-Funktion mittels der zweiten Druckversorgungseinrichtung DV2 erfolgt in diesem Fall leicht eingeschränkt, insbesondere kein Pauf bei Pab. Eine voll individuelle ABS-Regelung ist trotzdem möglich. Zu berücksichtigen ist der seltene Einsatz der Druckversorgungseinrichtung DV2 bei Drücke größer 120 bar und bei Ausfall der ersten Druckversorgungseinrichtung DV1.

Typisch ist für den o. g. MUX-Betrieb die Druckregelung auch bei ABS über die Volumenmessung und über die Kolbenbewegung der Druckversorgungseinrichtung DV1, auch unter Berücksichtigung der Druck-Volumen-Kennlinie (p-V-Kennlinie). Bei einer einfachen Exzenterkolbenpumpe kann dies nicht über die Kolbenbewegung, jedoch über die Förderzeit = Volumen bei zusätzlicher Drehzahlmessung und ggfs. Druckmessung erfolgen. Somit ist auch eine Volumenzumessung für den Druckaufbau möglich. Vorteilhaft ist hier beim Druckaufbau p_{auf} ein serieller und nicht gleichzeitiger Druckaufbau p_{auf} in den einzelnen Radbremsen. Zu berücksichtigen ist dabei die Ventildimensionierung und der Staudruck am Ventil, insbesondere bei den Ventilen BP1 und BP2 bei schnellem Druckaufbau in den Radkreisen. Der Staudruck von o. g. Ventilen wirkt als Druckdifferenz zwischen den Bremskreisen BK1 und BK2. Dieser kann erheblich reduziert werden, wenn in diesem Betriebszustand beide Druckversorgungseinrichtungen DV1 und DV2 eingeschaltet werden. Hier bietet sich auch eine einkreisige Zahnradpumpe anstelle einer Kolbenpumpe an. Hierbei kann der Druckabbau p_{ab} und Druckaufbau p_{auf} auch über die Zahnradpumpe erfolgen. Hierzu ist anstelle des Rückschlagventils RV ein nicht gezeichnetes Ventil MV in der Rückleitung zum Vorratsbehälter VB notwendig. Damit ist auch mit der zweiten Druckversorgungseinrichtung DV2 ein voller MUX-Betrieb möglich.

Die Steuer- und Regeleinrichtung ECU ist Bestandteil des gesamten Systems und des Packagings. Für eine fehlersichere Funktion ist eine redundante oder teilredundante ECU notwendig. Diese teilredundante ECU kann auch für bestimmte Funktionen zusätzlich zur redundanten ECU verwendet werden. In jedem Fall sind bzw. sollten die Ventile redundant über getrennte Ventiltreiber und Trennschalter angetrieben, der einen ausgefallenen Ventiltreiber abschaltet.

Zur Redundanz der Steuer- und Regeleinrichtung ECU ist auch ein redundantes Bordnetzanschluss notwendig. Auch kann ein Anschluss mit 48V für den Anschluss der Motoren verwendet werden. Vorteil bei 48V ist eine höhere Dynamik. Bei Ausfall des Motors von der Druckversorgungseinrichtung DV1 bei 48V ist Notbetrieb mit 12V mit ca. 50% Leistung gegeben mit red. Dynamik und Kostenersparnis. Hierzu ist eine Auslegung des Motors auf z.B. 24V notwendig.

Vorzugsweise wird im Bremskreis BK2 ein Druckgeber DG, ggf. auch in BK1 eingesetzt. Bei Ausfall des Druckgebers kann eine Druckregelung über die Strommessung der Motoren und Positionssteuerung des Kolbens über die p-v-Kennlinie erfolgen.

Alternativ kann die hydraulische Verbindung von der Druckversorgungseinrichtung des Bremskreises BK2 - wie in Figur 1b dargestellt und mit X bezeichnet - mit der inneren Verbindungsleitung VLa der Ventile BP1 und BP2 erfolgen. Bei dieser Alternative wirkt die Druckversorgungseinrichtung DV2 nicht mehr direkt in den Bremskreis BK2. Dies hat einen Vorteil bei einem Ausfall der Ventile BP2, SV und der Druckversorgungseinrichtung DV1. Hier kann der Ausfall von DV1 und DV2 vermieden werden, indem DV2 bei geschlossenem BP2 und PD1 in den Bremskreis BK1 wirkt. Zu berücksichtigen sind aber Dreifachfehler mit einer minimalen Ausfallwahrscheinlichkeit von ca. <5-10⁻¹⁸/Jahr mit Vergleich zum Ausfall Radkreis mit <5-10⁻⁶/Jahr, d.h. bei einer Million Fahrzeuge 5 Fehler pro Jahr. Verschiedene Nachteile stehen dagegen, z. B. bei Ausfall des Ventils FV (z.B. undicht), erfolgt auch Ausfall der Druckversorgung im Bremskreis BK2.

In der Druckleitung einer Druckversorgungseinrichtung DV1, DV2 kann ein Überdruckventil ÜV1, ÜV2 zum Schutz des Antriebes, insbesondere der Spindel und/oder des Kugelgewindetriebes, angeordnet sein, welches z.B. bei ca. 120 bar öffnet.

Fig. 1a zeigt eine Erweiterung der Ventilanordnung mit zusätzlichem TV-Ventil als Redundanz zum Ventil FV. Hierbei kann der DV-Anschluss zwischen BP1 und TV erfolgen mit der Folge, dass ein BK1 mit SV-Ausfall (extrem selten <10⁻⁹/Jahr) keinen Ausfall von DV1 zur Folge hat. Dagegen steht Mehraufwand und Absicherung der Verbindung von BK1 zu BK2 nur über ein BP-Ventil.

Von großer Bedeutung ist auch der hydraulische Anschluss der Ventile von außen und innen zum Ventilsitz. Hierbei muss der Fehlerfall berücksichtigt werden, dass trotz Redundanz der elektrische Anschluss zur Ventilspule oder diese selbst ausfällt. Wenn in diesem Fall der Druck reduziert wird, auch durch Ausfall einer Komponente, so muss das Ventil durch die Druckdifferenz öffnen. Der Druck darf nicht eingeschlossen bleiben. Z. B. kann das FV-Ventil Druck reduzieren und Volumen in den Hauptbremszylinder HZ mit niedrigem Druck ablassen, wenn der Fahrer das Bremspedal löst. Ohne diese Maßnahme würde das Fahrzeug nach der Bremsung mit dem zuvor eingesteuerten Druck stehen bleiben oder weiterfahren, was zur Überhitzung der Bremse mit Totalausfall führen würde. Trotz der beschriebenen redundanten Ansteuerung der Ventile darf dieser extrem seltene Fall nicht auftreten und kann vermieden werden. Dies ist ein weiteres Sicherheitsmerkmal der vorgeschlagenen Lösung. Dementsprechend sind alle Ventile, wie in den Figuren dargestellt, mit den hydraulischen Leitungen so verbunden, dass diese ohne elektrische Ansteuerung bei Druckreduzierung über die Ventile ZAV und DV1 bzw. über das Ventil FV zum Hauptbremszylinder HZ immer durch die bestehende Druckdifferenz öffnen.

Alternativ kann auch durch eine modifizierte elektromotorische Parkbremse EPB die ABS-Regelung über die Druckversorgungseinrichtung DV1 bzw. DV2 und die beiden Verbindungsschaltventile BP1 und BP2 erfolgen. Hierbei kann auch zur Bildung einer Redundanz der Motor einer elektromotorischen Parkbremse EPB mit geringerer Dynamik für die ABS-Regelung verwendet werden. Die hydraulischen Hauptleitungen 4, 5 sind dann mit den elektromotorischen Parkbremsen EPB verbunden.

Fig. 1c zeigt die Funktion der Druckversorgungseinrichtungen DV1 und DV2 beim Druckaufbau p_{auf} und Druckabbau p_{ab}. Der Kolben der DV1 erzeugt das Volumen, das über das PD1-Ventil in den Bremskreis BK1 und über BP1 und BP2 in den Bremskreis BK2 gelangt. Der Druck wird über den Druckgeber DG gemessen. Zum Druckabbau p_{ab} bewegt sich der Kolben zurück mit entsprechender Rückströmung des Volumens. Bei höheren Drücken oder Ausfall von DV1 setzt die DV2 ein und fördert das Volumen direkt in Bremskreis BK2 und über die Ventile BP2 und BP1 in BK2, PD1 ist geschlossen. Der Druckabbau p_{ab} kann über die Druckversorgungseinrichtung DV1 erfolgen, wobei das Volumen von größer als 120 bar über das Schnüffelloch abströmt. Alternativ kann der Druckabbau p_{ab} über das zentrale Abführventil ZAV erfolgen. Auch hier erfolgt die Druckmessung und -regelung über den Druckgeber DG. Bei Ausfall des Druckgebers DG kann auch die Strom- und Wegmessung des Kolbens als Ersatzsignal verwendet werden.

Ein weiterer Vorteil ist die Möglichkeit zur Unterstützung der Parkierbremse EPB beim Parken. Mittels einer oder beiden Druckversorgungseinrichtungen DV1 und DV2 kann eine Vorspannung in der Parkierbremse erzeugt werden, so dass deren Elektromotor in Leistung und Moment reduziert ausgelegt werden kann. Aufgrund redundanter Druckversorgungseinrichtungen ist diese Anwendung ausreichend fehlersicher.

Fig. 1d zeigt die Auswirkung von Fehlern / Ausfall. Bei Ausfall des Bremskreises BK1 im Radzylinder oder Zuleitung wird das Schaltventil SV geschlossen. Bei Doppelfehler in der Radbremse und im Schaltventil SV fällt BK1 aus und über die Druckversorgungseinrichtung DV2 wird Druck im Bremskreis BK1 erzeugt. Analog bei Ausfall einer Radbremse RB und/oder Ventils SV im Bremskreis BK2. Dann erzeugt die Druckversorgungseinrichtung DV1 den Druck im BK1. Hierbei ist die Sicherheitsfunktion der redundanten Ventile BP1 und BP2 von großer Bedeutung.

Fig. 1e zeigt die Wirkung bei Ausfall beider Druckversorgungseinrichtungen DV1 und DV2, z. B. bei Bordnetzausfall. Hier wird der Druck über die Pedalbetätigung und Kolben erzeugt. Das Volumen gelangt über die Ventile FV, BP1 in BK1 und FV, BP2 in BK2 und WS. Zu erwähnen ist der ausfallsichere Hauptbremszylinder HZ mit den redundanten Dichtungen, was das Potenzial hat, die Anforderungen an die Redundanz des Bordnetzes zu verringern, um Kosten zu sparen. Hierbei kann eine Teilredundanz in der ECU für verschiedene Funktionen wie z. B. vereinfachte ABS-Regelung eingesetzt werden.

Die Ausführungen zeigen, dass durch konsequenten Einsatz von Redundanz mit Diagnose der schlafenden Fehler bei Undichtheit eine außerordentliche Fehlersicherheit gegeben ist. Durch die optimierte Ventilanordnung ergibt sich weniger Aufwand als konventionell und ein ausfallsicheres System. Doppelfehler mit gleichzeitigem Auftreten sind extrem selten, d.h. im Bereich von 10-9/Jahr. Bei extrem wichtigen Doppelfehlern wie Bremskreisausfall in der Radbremse oder im Schaltventil SV ist sogar der Totalausfall der Bremse vermeidbar, da noch ein Bremskreis voll wirksam zur Bremskraftverstärkung zur Verfügung steht.

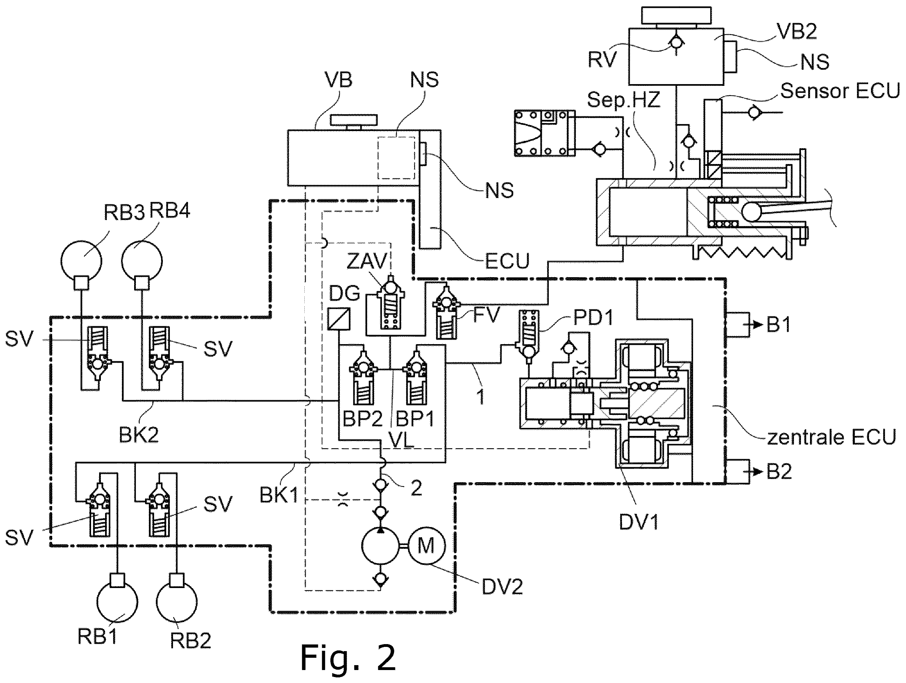

Fig. 2 zeigt die eingangs erwähnte Möglichkeit der modularen Bremsweise mit separatem Hauptbremszylinder HZ zum Hauptaggregat, was Vorteile beim Einbau und der Geräuschübertragung zur Spritzwand bringt. Nachteilig ist ein getrennter Vorratsbehälter ggf. mit Niveaugeber und kleiner ECU zur Aufnahme der Sensorsignale und Übertragung der Signale zur zentralen ECU.

Ein weiteres Problem entsteht, wenn zur Diagnose des Hauptbremszylinders HZ zusätzliches Volumen von der Druckversorgungseinrichtung DV1 über die Drossel in den Vorratsbehälter VB2 gelangt. Lösung hierfür ist die Diagnose bei kleinem Druck < 5 bar. Bei der ohnehin für die Diagnose notwendigen Druckmessung ist keine Druckreduzierung ein Indiz, dass der Vorratsbehälter VB bereits voll ist. Hierbei hat der Deckel des VB ein RV integriert. Weiterhin wird nach der Diagnose ein bestimmtes Volumen von der DV aus dem VB abgesaugt. Somit kann der zusätzliche Niveausensor NS eingespart werden und eine Diagnose des HZ ist möglich.

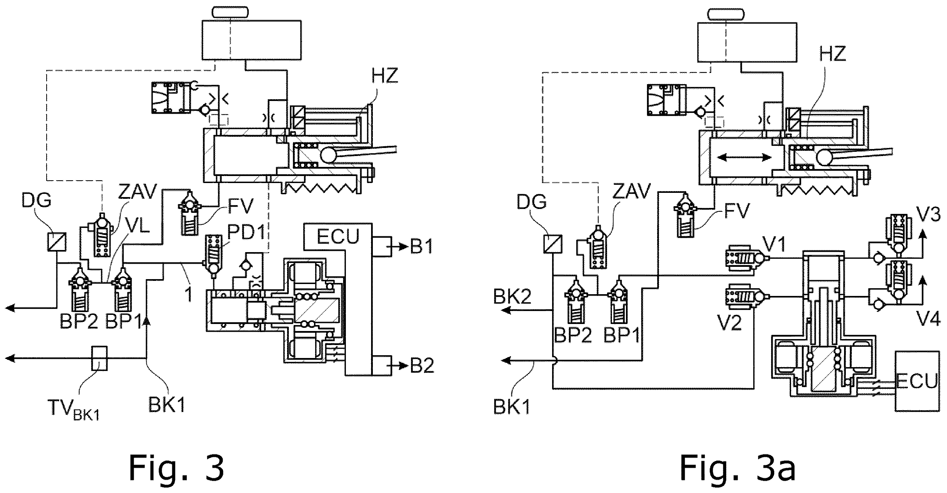

Fig. 3 und 3a zeigen die Anwendung der Ventilschaltung bei nur einer Druckversorgungseinrichtung DV1. Hierzu eignet sich der Kolben mit redundanten Dichtungen, wie in Fig. 1 beschrieben. Zusätzlich kann die Motoransteuerung wie bekannt über 2 x 3 Phasen erfolgen. Diese Anforderung kann niedrigeren Anforderungen von Level 3 genügen. Der Motor und Antrieb müssen für höhere Drücke als 120 bar ausgelegt werden. Zur Vermeidung der Auswirkung von Doppelfehlern BK1 und SV kann hier noch ein Trennventil TV in BK1 eingesetzt werden. Diese Lösung ist vorwiegend für kleinere Fahrzeuge geeignet. Die Hydraulikleitungen 4, 5 der beiden Bremskreise BK1 und BK2 können mit unterschiedlichen Ventilschaltungen, z.B. entsprechend Figur 1 mit Multiplexbetrieb oder individueller konventioneller Radregelung mit Ein- und Auslassventil pro Radbremse mit den Druckversorgungen DV1 und DV2 und Radbremsen RB1-4 verbunden werden.

Fig. 3a zeigt die Anwendung des 2-kreisigen Doppelhubkolbens, dessen Vorhub über V1 den BK1 speist und der Rückhub über BK2. Beide Kreise des DHK können über die BP1 und BP2 in den zweiten BK eingespeist werden. Zum Pab muss das Volumen des DHK wie aus WO2016/023994 A1und WO2016/023995 A1 bekannt über Ventile V3 und V4 in der VB abgeführt werden.

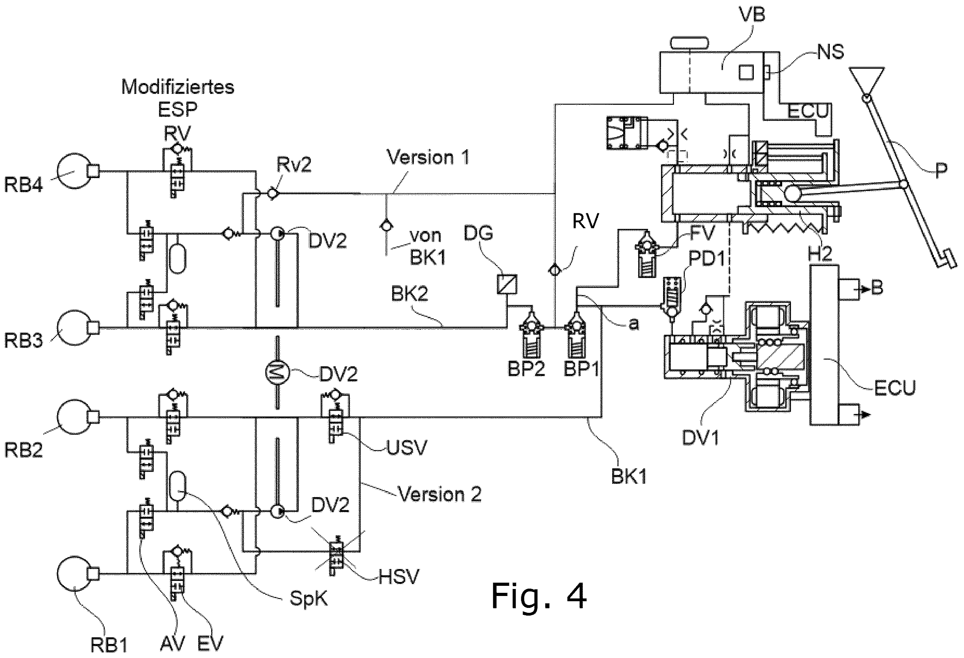

Fig. 4 zeigt zwei mögliche Versionen 1 und 2 von Ventilanordnungen für einen E/X-Boost in Kombination mit ESP. Hierbei können mit einer modifizierten Ventilschaltung nach Figur 1 die für ESP zusätzlichen Ventile eingespart werden, so dass die Ventilanordnung dem des ABS mit Einlassventil EV und Auslassventil AV und Speicherkammer SpK entspricht, wodurch geringere Kosten und geringeres Gewicht im Vergleich zur ESP-Ventilanordnung erreicht werden. Bei Version 1 fördert die Druckversorgungseinrichtung DV1 das Volumen über die Ventile BP1 und BP2 in die Bremskreise BK1 und BK2. Das Ansaugen von Volumen bei Ausfall erfolgt nicht mehr über den E/X-Boost, sondern direkt über das Rückschlagventil RV2 aus dem Vorratsbehälter mit Niveausensor NS, was für Betriebsfälle für die verschiedenen Funktionen vorteilhaft ist, da geringere Ansaugverluste wirksam sind im Vergleich zu Manschetten mit zusätzlicher Abschaltung des Wegsimulators, indem der Hauptbremszylinder das Nachfördervolumen liefert. Bei Version 2 verbleibt das Ventil USV, wobei hingegen das Ventil HSV entfallen kann, indem über BP1 und BP2 über das Saugventil SV angesaugt wird. Hierbei ist das Ventil HSV geschlossen.

Alle Funktionen wie BK-Ausfall SV(EV)-Ausfall entsprechen der Beschreibung in Fig. 1 mit den gezeigten Vorteilen. Die Position des Druckgebers DG, hier in BK2, kann variiert werden. Die Verbindung von FV zu BP1 und BP2 kann mit Verzicht auf Redundanz auch direkt zu BP1 erfolgen (s. gestrichelte Leitungen).

Dieses System hat nicht nur Kosten- und Gewichtsvorteile, sondern bietet auch eine Verbesserung der Fehlersicherheit u.a. durch Niveaumessung im Vorratsbehälter bei Leck im System. Auch dieser Sensor sollte redundant ausgeführt werden, was leicht zu realisieren ist, wenn die ECU am Vorratsbehälter anliegt, in dem die Sensorelemente auf der Leiterplatte angeordnet werden können.

Letztlich kann diese Ventilanordnung bei einem E/X-Boost eingesetzt werden. Vorteile: weniger Ventilaufwand, Kosten und Gewicht mit Vorteilen der gesteigerten Fehlersicherheit.

Mit dieser fehlersicheren Ventilanordnung kann die Anzahl der Ventile um ca. 40 % reduziert werden im Vergleich zu einer Ventilanordnung bekannter integrierter 1-Box-Systeme, welche mit einem höheren Ventilaufwand nicht fehlersicher sind.

Die Druckversorgungseinrichtungen DV1 und DV2 können neben der Druckversorgung für die ABS- und/oder ESP-Funktion auch für die Steuerung der Rekuperation und Torque-Vektoring genutzt werden.

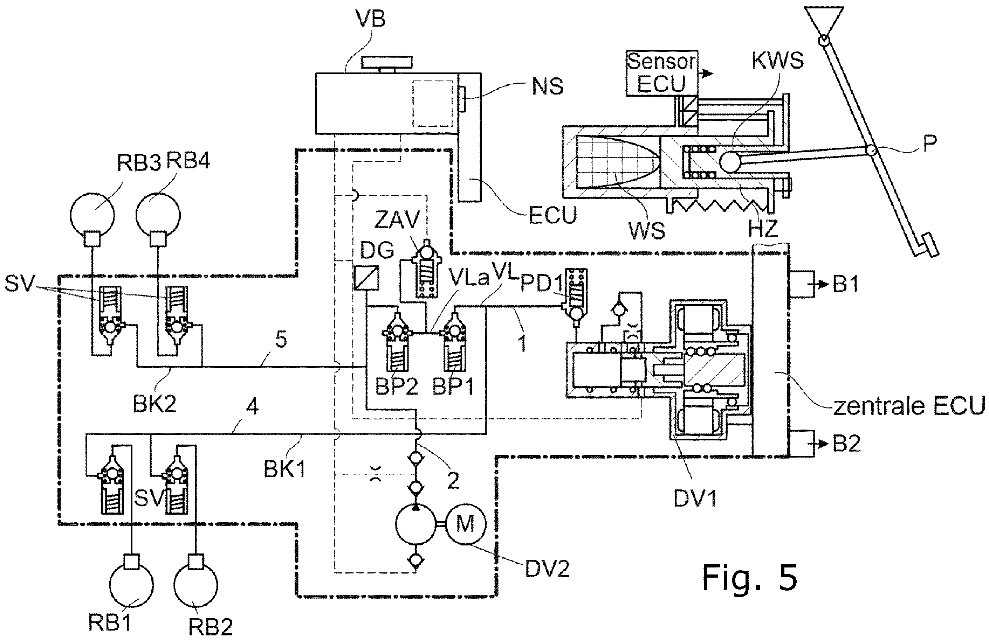

Fig. 5 zeigt die Druckversorgungseinrichtungen DV1 und DV2 mit Ventilanordnung. Hierbei ist ein elektr. Bremspedal, ein sog. E-Pedal, mit WS-Pedalwegsensoren mit kleiner Sensor-ECU und KWS ohne hydraulisch wirkenden Hauptbremszylinder HZ in einem Aggregat zusammengefasst sind. Dies hat Vorteile, wenn das Einbauvolumen im Aggregateraum klein ist oder die Geräuschanforderungen hoch. Anstelle des HZ mit Vorratsbehälter VB (nicht ausgeführt in Fig. 5) kann auch die Anordnung mit Pedalbetätigung mit WS sog. E-Pedal eingesetzt werden. Die Signale der Pedalwegsensoren werden in einer Sensor-ECU aufgearbeitet und der zentralen ECU zugeführt. Auch kann für Level 5 alternativ zum E-Pedal ein Bremsschalter eingesetzt werden.

Das o.g. Aggregat besitzt den 2-Kreis-VB mit Schwimmer und Niveausensor NS, der in der zentralen Steuer- und Regeleinheit ECU integriert sein kann. Dieser Niveausensor NS soll ebenfalls redundant ausgebildet sein und stetig das Niveau messen, da hierüber ein Volumenverlust durch Leck schnell erfasst wird. Da hier die Verbindung zum Hauptbremszylinder HZ fehlt und damit auch die Rückfallebene zum Hauptbremszylinder HZ bei dem Ausfall beider Druckversorgungseinrichtungen DV1 und DV2 und/oder des Bordnetzes, sind die Ventile BP1 und BP2 vorzugsweise als stromlos offene Ventile ausgeführt.

### Bezugszeichenliste

- 1 - 11: Hydraulikleitungen
- BK1: Bremskreis 1
- BK2: Bremskreis 2
- HZ: Hauptzylinder
- BP1: Bypassventil 1 (SO) bzw. Verbindungsschaltventil
- BP2: Bypassventil 2 (SO) bzw. Verbindungsschaltventil
- VB: Vorratsbehälter
- WS: Wegsimulator
- WA: Wegsimulatorabschaltventil
- ECU: elektrische Steuereinheit
- DV: Druckversorgung
- DG: Druckgeber
- D1 - D7: Dichtungen
- AV1, AV2: Auslassventile (SG)
- ZAV: zentrales Auslassventil (SG)
- SV: Schaltventil (SO)
- RZ: Radzylinder
- RB1-RB4: Radbremsen
- NV: Niveaugeber
- PD1: Schaltventil (SG)
- SO: stromlos offen
- SG: stromlos geschlossen
- SV: Saugventil
- RV: Rückschlagventil
- KWS: Kraft-Weg-Messelement
- Sp: Spindel mit KGT
- Ko: Kolben
- Dr: Drossel
- D: Dampferelement
- PS: Pedalwegsensoren
- P: Pedalbetätigung
- NS: Niveausensor
- TV: Trennventil
- V1 - V4: Ventile des DHK
- VL: Hydraulische Verbindungsleitung zur Verbindung der beiden Bremskreise BK1 und BK2
- VLa: innere Verbindungsleitung zur Verbindung der beiden Verbindungsschaltventile BP1 und BP2
- ÜV1, ÜV2: Überdruckventil

Alternativ oder zusätzlich kann die Erfindung durch die nachfolgenden Ausführungsformen beschrieben werden.
1. Bremssystem für ein Fahrzeug, folgende Komponenten aufweisend:
   - zwei hydraulische Bremskreise (BK1, BK2) mit jeweils mindestens einer hydraulisch wirkenden Radbremse (RB1, RB2, RB3, RB4),
   - eine erste Druckversorgungseinrichtung (DV1) zur Druckversorgung der Radbremsen (RB1, RB2, RB3, RB4), mittels welcher, insbesondere durch Vor- und Rückbewegung eines Kolbens, in mindestens einem Bremskreis (BK1, BK2) Druck auf und abgebaut werden kann,
   - eine zweite Druckversorgungseinrichtung (DV2) mit einer kontinuierlich fördernde Pumpe, insbesondere in Form einer Kolbenpumpe, Zahnradpumpe oder Exzenterkolbenpumpe, ist, welche von einem elektromotorischen Antrieb (M) angetrieben ist,
   - mindestens einer Ventilanordnung (HCU) mit Ventilen zum radindividuellen Einstellen von Bremsdrücken und/oder zum Trennen bzw. Verbinden der Radbremsen (RB1, RB2, RB3, RB4) mit der mindestens einen Druckversorgungseinrichtung (DV1, DV2)
   - mindestens einer elektronischen Steuer- und Regeleinheit,
   - einer hydraulischen Verbindungsleitung (VL) zur Verbindung der zwei Bremskreise (BK1, BK2),
   - jeder Radbremse (RB1, RB2, RB3, RB4) jeweils ein eigenes Schaltventil (SV), zugeordnet ist, und jeder Bremskreis (BK1, BK2) eine Hydraulikhauptleitung (4, 5) aufweist, über die die Schaltventile (SV) mit jeder der beiden Druckversorgungseinrichtung (DV1, DV2) verbunden bzw. -verbindbar sind,
   - mindestens ein Auslassventil (AV1, AV2, ZAV) zum Druckabbau in den Vorratsbehälter (VB) vorgesehen ist,
   dadurch gekennzeichnet, dass
   die erste und die zweite Druckversorgungseinrichtung (DV1, DV2) auf unterschiedlich hohe Maximaldrücke (P1, P2) bzw. Druckniveaus und/oder unterschiedlich große Fördervolumina (FV1ₘₐₓ, FV2ₘₐₓ) ausgelegt sind.
2. Bremssystem nach Ausführungsform 1, dadurch gekennzeichnet, dass die erste Druckversorgungseinrichtung (DV1) einen Maximaldruck (P1) aufweist, der 40-70% des Maximaldrucks (P2) der zweiten Druckversorgungseinrichtung entspricht. (Neues Merkmal)
3. Bremssystem nach Ausführungsform 1 oder 2, dadurch gekennzeichnet, dass die erste Druckversorgungseinrichtung (DV1) in einer Hubrichtung ein maximales Fördervolumen (FV1ₘₐₓ) aufweist, dass 40-80% des maximalen Fördervolumens (FV2ₘₐₓ) der Bremsanlage entspricht. (Neues Merkmal)
4. Bremssystem nach einer der Ausführungsformen 1 bis 3, dadurch gekennzeichnet, dass die zweite Druckversorgungseinrichtung (DV2) bei schnellem Druckaufbau oder Druckaufbau über dem Maximaldruck der ersten Druckversorgungseinrichtung, insbesondere einem Druck über 120 bar, die andere Druckversorgungseinrichtung (DV1) unterstützt und/oder die Druckversorgung bei Fading und/oder für die ABS-Funktion vornimmt und/oder bei Ausfall der anderen Druckversorgung (DV1) dessen Funktion mit übernimmt.
5. Bremssystem nach einer der Ausführungsformen 1 bis 4, dadurch gekennzeichnet, dass die zweite Druckversorgungseinrichtung (DV2) im Normalbetrieb bei einem benötigten Fördervolumen (FVₛₒₗₗ), welches das maximale Fördervolumen (FV1ₘₐₓ) der ersten Druckversorgungseinrichtung (DV1) überschreitet die erste Druckversorgungseinrichtung (DV1), insbesondere bei Einflussfaktoren wie Luftblasen, Fading, etc., unterstützt. (neues Merkmal)
6. Bremssystem nach einer der vorhergehenden Ausführungsformen, dadurch gekennzeichnet, dass der Druckaufbau und Druckabbau bis zum Maximaldruck (P1) der ersten Druckversorgungseinrichtung (DV1) durch die erste Druckversorgungseinrichtung (DV1) durch Verstellung ihres Kolbens der KolbenZylindereinheit erfolgt.
7. Bremssystem nach einer der vorhergehenden Ausführungsformen, dadurch gekennzeichnet, dass bei der ABS-Funktion der Druckaufbau (p_{ab}) bis zum Maximaldruck (P1) der ersten Druckversorgungseinrichtung (DV1) durch die erste Druckversorgungseinrichtung (DV1) erfolgt, und der Druckabbau über das Verstellen des Kolbens der Kolben-Zylinder-Einheit und/oder über mindestens ein Auslassventil (AV1, AV2, ZAV) erfolgt.
8. Bremssystem nach einer der vorhergehenden Ausführungsformen, dadurch gekennzeichnet, dass der Druckaufbau (p_{auf}) im Normalbetrieb, insbesondere auch für die ABS-Funktion, in den Radbremsen von einem Druckniveau (P₀) bis zum Blockierdruck (P₁) mittels der einen Druckversorgungseinrichtung (DV1) erfolgt, und dass der weitere Druckaufbau (p_{auf}) bis zum Maximaldruck (P₂) mittels der anderen Druckversorgungseinrichtung (DV2) erfolgt.
9. Bremssystem nach einer der vorhergehenden Ausführungsformen, dadurch gekennzeichnet, dass bei der ABS-Funktion in mindestens einer Radbremse (RB) oder einem Bremskreis (BK1, BK2) ein Druckaufbau (p_{auf}) mittels der ersten Druckversorgungseinrichtung (DV1) erfolgt, wobei gleichzeitig ein Druckabbau in einer anderen Radbremse bzw. dem anderen Bremskreis über mindestens ein Auslassventil (AV1, AV2, ZAV) erfolgt.
10. Bremssystem nach einer der vorhergehenden Ausführungsformen, dadurch gekennzeichnet, dass Motor der ersten Druckversorgungseinrichtung (DV1) zwei Wicklungssysteme mit jeweils 3 Phasen aufweist, und dass die Steuerungselektronik (ECU) des Motors redundant ausgeführt ist, so dass bei Ausfall eines Wicklungssystems oder Teilausfall der Steuerungselektronik (ECU) der Motor noch mit verringerter Leistung bzw. geringerem Drehmoment betrieben werden kann.
11. Bremssystem nach einer der vorhergehenden Ausführungsformen, dadurch gekennzeichnet, dass die zweite Druckversorgungseinrichtung (DV2) Hydraulikmedium direkt ohne zwischengeschaltete Schaltventile in einen Bremskreis (BK2) fördert und über mehrere Ventile (BP1, BP2) mit dem anderen Bremskreis (BK1) verbindbar ist.
12. Bremssystem nach einer der vorhergehenden Ausführungsformen, dadurch gekennzeichnet, dass die zweite Druckversorgungseinrichtung (DV2) eine elektrisch angetriebene einkreisige Kolbenpumpe mit Bürstenmotor oder Zahnradpumpe mit Bürstenmotor ist.
13. Bremssystem nach einer der vorhergehenden Ausführungsformen, dadurch gekennzeichnet, dass bei Ausfall der ersten Druckversorgungseinrichtung (DV1) der Druckaufbau (p_{auf}) mittels der zweiten Druckversorgungseinrichtung (DV2) und der Druckabbau (p_{ab}) über Auslassventile (AV1, AV2, ZAV) erfolgt.
14. Bremssystem nach einer der vorhergehenden Ausführungsformen, dadurch gekennzeichnet, dass das Bremssystem einen von einer Betätigungseinheit (1), insbesondere in Form eines Bremspedals, betätigbaren Hauptbremszylinder (HZ) mit nur einem Kolben aufweist, dessen einer Druckraum (A1) mit einem Wegsimulator (WS) verbunden ist und mit mindestens einem hydraulischen Bremskreis (BK1, BK2) über eine Hydraulikleitung (3) verbindbar ist, wobei mindestens ein gesteuertes Ventil (FV, FVr) zur Absperrung der Hydraulikleitung (3) vorgesehen ist.
15. Bremssystem nach einer der vorhergehenden Ausführungsformen, dadurch gekennzeichnet, dass jede Druckversorgungseinrichtung (DV1, DV2) einem Bremskreis (BK1, BK2) zur Druckeinstellung zugeordnet ist oder beide Druckversorgungseinrichtung (DV1, DV2) für die Druckänderung in mindestens einem Bremskreis (BK1, BK2) zusammen wirken und/oder die Druckänderung in mindestens zwei Radbremsen durch die beiden Druckversorgungseinrichtungen (DV1, DV2) gleichzeitig oder nacheinander (simultan/teilsimultan/seriell) erfolgt.
16. Bremssystem nach einer der vorhergehenden Ausführungsformen, dadurch gekennzeichnet, dass die erste Druckversorgungseinrichtung (DV1) auf den Blockierdruck der Radbremsen bei high □ ausgelegt ist und die zweite Druckversorgung (DV2) für höhere Drücke, insbesondere bei Fading oder Veränderung des Volumenhaushalts durch Einflussfaktoren wie z.B. Luftblasen oder Schrägverschleiß, ausgelegt ist.
17. Bremssystem nach einer der vorhergehenden Ausführungsformen, dadurch gekennzeichnet, dass beide Druckversorgungseinrichtungen (DV1, DV2) in einer Baueinheit zusammengefasst sind und die Achse der Kolben-Zylinder-Einheit der ersten Druckversorgungseinrichtung (DV1) senkrecht zur Achse der zweiten Druckversorgungseinrichtung (DV2) ausgerichtet ist.
18. Bremssystem nach einer der vorhergehenden Ausführungsformen, dadurch gekennzeichnet, dass eine Betätigungseinheit eine Hydraulikeinheit mit einer Kolben-Zylinder-Einheit und einer Druckkammer sowie eine Wegsimulatoreinheit aufweist, die insbesondere eine Fahrerwunscherfassung, insbesondere mit mehreren Wegsensoren mit Differenzwegmessung (KWS), aufweist.
19. Bremssystem nach einer der Ausführungsformen 1 bis 17, dadurch gekennzeichnet, dass eine Betätigungseinheit ein E-Pedal mit trockenem Wegsimulator und mit Fahrerwunscherfassung über Sensoren ist.
20. Bremssystem nach einer der vorhergehenden Ausführungsformen, dadurch gekennzeichnet, dass eine Bremskreistrennung vorgesehen ist, die zwei in Reihe geschaltete Magnetventile (BP1, BP2) zur Bremskreistrennung aufweist.
21. Bremssystem nach Ausführungsform 20, dass die Betätigungseinheit über eine Verbindungsleitung mit einer die beiden Magnetventile (BP1, BP2) verbindenden Verbindungsleitung (VL) hydraulisch verbunden bzw. verbindbar ist, derart, dass über eines oder beide Magnetventile (BP1, BP2) bei Betätigung der Betätigungseinheit Druck in einem oder beiden Bremskreisen (BK1, BK2) aufbaubar ist.
22. Bremssystem nach einer der vorhergehenden Ausführungsformen, dadurch gekennzeichnet, dass über eine Druckversorgung auch bei Ausfall der jeweils anderen Druckversorgung eine mindestens achsweise ABS-Regelung, insbesondere radindividuelle ABS-Regelung, erfolgt.
23. Bremssystem nach einer der vorhergehenden Ausführungsformen, dadurch gekennzeichnet, bei der ABS-Regelung der Druckaufbau über die der Radbremse (RB) zugeordnete Druckversorgungseinrichtung (DV1, DV2) erfolgt, und dass der Druckabbau über den Kolben der ersten Druckversorgungseinrichtung (DV1) und/oder über ein Auslassventile (AV1, AV2, ZAV) erfolgt.
24. Bremssystem nach einer der vorhergehenden Ausführungsformen, dadurch gekennzeichnet, dass zur Trennung der ersten Druckversorgungseinrichtung (DV1) von den hydraulischen Bremskreisen (BK1, BK2) mindestens ein Trennventil (PD1) vorgesehen ist, und dass über ein Rückschlagventil ein Nachfördern von Volumen durch Rückhub des Kolbens der ersten Druckversorgungseinrichtung (DV1) aus dem Vorratsbehälter (VB) erfolgt.
25. Bremssystem nach einer der vorhergehenden Ausführungsformen, dadurch gekennzeichnet, dass in der Verbindungsleitung (VL) zwei in Reihe geschaltete stromlos offene Verbindungsschaltventile (BP1, BP2) angeordnet sind, wobei entweder
   - die Verbindungsschaltventile (BP1, BP2) derart angeordnet sind, dass sie im stromlosen Zustand unterstützt durch einen in der jeweiligen Hydraulikhauptleitung (4, 5) herrschenden Druck öffnen
      und/oder
   - der innere Abschnitt (VLa) der Verbindungsleitung (VL), welcher die beiden Anschlüsse der Verbindungsschaltventile (BP1, BP2) direkt miteinander verbindet über eine weitere hydraulische Leitung (3) mit dem Druckraum (A1) eines Hauptbremszylinders (HZ) in Verbindung ist, wobei mindestens ein Ventil (FV) in der weiteren Hydraulikleitung (3) zu deren wahlweisen Absperrung angeordnet ist.
26. Bremssystem nach Ausführungsform 25, dadurch gekennzeichnet, dass Verbindungsschaltventil (BP1, BP2) ein 2/2-Wegeventil ist und/oder dass der dem Ventilsitz zugeordnete Ventilanschluss eines Verbindungsschaltventils (BP1, BP2) mit einer Hydraulikhauptleitung (4, 5) in hydraulischer Verbindung ist.
27. Bremssystem nach einer der vorhergehenden Ausführungsformen, dadurch gekennzeichnet, dass die innere Verbindungsleitung (VLa) mit einer hydraulischen Leitung (6) mit einem Vorratsbehältnis (VB) verbunden ist und in dieser weiteren hydraulischen Leitung (100) entweder ein Rückschlagventil (RV-Fig. 4) oder ein Schaltventil (ZAV) angeordnet ist.
28. Bremssystem nach Ausführungsform 27, dadurch gekennzeichnet, dass das Schaltventil (ZAV) einen Durchflussquerschnitt von kleiner 1mm², bevorzugt kleiner 0,7mm², aufweist.
29. Bremssystem nach einer der Ausführungsformen 25 bis 28, dadurch gekennzeichnet, dass die Verbindungsschaltventile (BP1, BP2) einen Durchflussquerschnitt von größer 1,5mm² aufweisen.
30. Bremssystem nach einer der Ausführungsformen 25 bis 29, dadurch gekennzeichnet, dass das Rückschlagventil (RV) in Richtung Vorratsbehältnis (VB) sperrt und einen Durchflussquerschnitt von größer 2mm², bevorzugt größer 3mm², aufweist.
31. Bremssystem nach einer der vorhergehenden Ausführungsformen, dadurch gekennzeichnet, dass die erste und die zweite Druckversorgungseinrichtung (DV1, DV2) auf unterschiedlich hohe Maximaldrücke (P1, P2) bzw. Druckniveaus ausgelegt sind, und dass in der Verbindungsleitung (VL) zwei in Reihe geschaltete stromlos offene Verbindungsschaltventile (BP1, BP2) angeordnet sind.
32. Bremssystem nach einer der vorhergehenden Ausführungsformen, dadurch gekennzeichnet, dass die Druckversorgungseinrichtung (DV1) den Druckaufbau für Druckbereiche kleiner gleich ihrem Maximaldruck (P1), insbesondere 120 bar, und für die ABS-Funktion übernimmt.
33. Bremssystem nach einer der vorhergehenden Ausführungsformen, dadurch gekennzeichnet, dass bei Ausfall der Druckversorgungseinrichtung (DV2) nur der maximale Druck (P1) der Druckversorgung (DV1) zur Verfügung steht.
34. Bremssystem nach einer der vorhergehenden Ausführungsformen, dadurch gekennzeichnet, dass eine der beiden Druckversorgungseinrichtungen (DV1, DV2) mit ihrer Druckseite über eine Hydraulikleitung (X), in der keines der Verbindungsschaltventile (BP1, BP2) angeordnet ist, mit dem inneren Abschnitt (VLa) der Verbindungsleitung (VL) verbunden ist.
35. Bremssystem nach Ausführungsform 34, dadurch gekennzeichnet, dass in der Hydraulikleitung (X) mindestens ein Rückschlagventil (RV1, RV2) angeordnet ist.
36. Bremssystem nach einer der vorhergehenden Ausführungsformen, dadurch gekennzeichnet, dass im Falle eines Ausfalls einer Druckversorgungseinrichtung (DV1, DV2) die andere noch funktionstüchtige Druckversorgungseinrichtung (DV1, DV2) die Druckversorgung und/oder Druckregelung in beiden Bremskreisen (BK1, BK2), insbesondere für ABS, ESP und/oder Rekuperation, übernimmt, wobei mittels mindestens einer Druckversorgungseinrichtung (DV1, DV2) und der Ventilanordnung (HCU) in mindestens einem Bremskreis, die Druckänderung in den Komponenten (RB1, RB2, RB3, RB4) für die ABS- und/oder ESP-Funktion seriell, d.h. zeitlich nacheinander, und/oder gleichzeitig erfolgt.
37. Bremssystem nach einer der vorhergehenden Ausführungsformen, dadurch gekennzeichnet, dass mindestens eine Hydraulikhauptleitung (4, 5), insbesondere die zu den Vorderradbremsen führende Hydraulikhauptleitung, über ein Abführventil (AV1, AV2) mit einem Vorratsbehälter (VB) und/oder der innere Abschnitt (VLa) der Verbindungsleitung (VLa) über ein zentrales Abführventil (ZAV) mit einem Vorratsbehältnis (VB) zum Druckabbau (P_{ab}) in mindestens einer Radbremse (RB1, RB2, RB3, RB4) und/oder beiden Bremskreisen (BK1, BK2) verbindbar ist bzw. verbunden wird.
38. Bremssystem nach einer der vorhergehenden Ausführungsformen, dadurch gekennzeichnet, dass der Hauptbremszylinder (HZ) ein Single-Hauptbremszylinder mit nur einem einzigen Druckraum (A1) oder ein Tandem-Hauptbremszylinder (THZ) mit mindestens zwei Kolben ist.
39. Bremssystem nach einer der vorhergehenden Ausführungsformen, dadurch gekennzeichnet, dass die Druckmodulation in den Radbremsen (RB1, RB2, RB3, RB4) eines Bremskreises (BK1, BK2) für die ABS-Funktion mittels der dem Bremskreis (BK1, BK2) zugeordneten Druckversorgungseinrichtung (DV1, DV2) im Multiplexbetrieb, insbesondere mittels eines Kolbens der Druckversorgungseinrichtung Volumina einer Hydraulikflüssigkeit zur Druckeinstellung verstellt werden, erfolgt.
40. Bremssystem nach einer der vorhergehenden Ausführungsformen, dadurch gekennzeichnet, dass der Druckabbau (P_{ab}) in den Radbremsen (RB1-4) seriell oder gleichzeitig bzw. simultan/teilsimultan erfolgt.
41. Bremssystem nach einer der vorhergehenden Ausführungsformen, dadurch gekennzeichnet, dass der Druckauf oder Druckabbau (P_{auf}, P_{ab}) in einer Radbremse (RB1, RB2) eines Bremskreises (BK1) über die Hubbewegung des Kolbens dessen zugeordneter Druckversorgungseinrichtung (DV1) erfolgt, und dass der Druckabbau (P_{ab}) in einer Radbremse (RB3, RB4) des anderen Bremskreises (BK2) über das zentrale Abführventil (ZAV) und das Verbindungsschaltventil (BP2) in das Vorratsbehältnis (VB) erfolgt.
42. Bremssystem nach einer der vorhergehenden Ausführungsformen, dadurch gekennzeichnet, dass in der Hydraulikleitung vom zentralen Abführventil (ZAV) hin zum Vorratsbehältnis (VB) ein redundantes zweites Abführventil (ZAVr) angeordnet ist und wirkt.
43. Bremssystem nach einer der vorhergehenden Ausführungsformen, dadurch gekennzeichnet, dass mindestens eine Druckversorgungseinrichtung (DV1, DV2) pro Bremskreis (BK1, BK2) vorgesehen ist.
44. Bremssystem nach einer der vorhergehenden Ausführungsformen, dadurch gekennzeichnet, dass mindestens eine Druckversorgungseinrichtung (DV1) eine Kolben-Zylinder-Einheit (1) aufweist, deren Kolben (Ko) über ein Getriebe (SP), insbesondere einen Spindelantrieb, von einem elektromotorischen Antrieb angetrieben und entweder ein Einfach-Hubkolben oder ein Doppel-Hubkolben ist.
45. Bremssystem nach einer der vorhergehenden Ausführungsformen, dadurch gekennzeichnet, dass das Schaltventil (SV) einen Anschluss hinter seinem Ventilsitz für die Radbremse aufweist.
46. Bremssystem nach einer der vorhergehenden Ausführungsformen, dadurch gekennzeichnet, dass der Antriebsmotor der zweiten Druckversorgungseinrichtung (DV2) ein Bürstenmotor ist, und dass das Fördervolumen zur Druckaufbausteuerung entweder aus Drehzahl und Zeit und/oder Drehwinkel bestimmt wird.
47. Bremssystem nach einer der vorhergehenden Ausführungsformen, dadurch gekennzeichnet, dass der Kolben (Ko) des Hauptbremszylinders (HZ) mittels einer Betätigungseinrichtung (P), insbesondere in Form eines Bremspedals, zum Druckaufbau in seinem Druckraum (A1) verstellbar ist, wobei insbesondere die Kolben-Zylinder-Einheit (HZ) optional ein Kraft-Weg-Messelement (KWS) aufweist.
48. Bremssystem nach Ausführungsform 48, dadurch gekennzeichnet, dass der Druckraum (A1) mittels einer Hydraulikleitung (3) mit der Hydraulikhauptleitung (4) des einen Bremskreises (BK1) verbunden ist, wobei zwei in Reihe und/oder parallel geschaltete Ventile (FV, TV) zum wahlweisen Absperren und Öffnen der Hydraulikleitung (3) dienen.
49. Bremssystem nach einer der vorhergehenden Ausführungsformen, dadurch gekennzeichnet, dass das Vorratsbehältnis (VB) einen redundanten, d.h. zweiten, Niveaugeber, insbesondere mit redundantem Sensorelement, aufweist.
50. Bremssystem nach einer der vorhergehenden Ausführungsformen, dadurch gekennzeichnet, dass in einem Modul, Gehäuse und/oder Baueinheit eine elektrische Steuer- und Regeleinheit (ECU), mindestens eine Druckversorgungseinrichtung (DV1, DV2) und Schaltventile angeordnet sind.
51. Bremssystem nach einer der vorhergehenden Ausführungsformen, dadurch gekennzeichnet, dass mindestens eine elektrische Steuer- und Regeleinheit (ECU) zwei voneinander getrennte Bordnetzanschlüsse aufweist.
52. Bremssystem nach einer der vorhergehenden Ausführungsformen, dadurch gekennzeichnet, dass die Kolben-Zylinder-Einheit (HZ) redundante Dichtungen (D1, D2, D3) aufweist, derart, dass ein Ausfall mindestens einer Dichtung (D1, D2, D3) mittels eines Diagnoseverfahrens ermittelbar ist, wobei optional ein Wegsimulator (WS) vorgesehen ist.
53. Bremssystem nach einer der vorhergehenden Ausführungsformen, dadurch gekennzeichnet, dass in der Hydraulikleitung zum Schnüffelloch der Kolben-Zylinder-Einheit (HZ) ein Rückschlagventil oder stromlos offenen Ventil (MV) angeordnet ist.
54. Bremssystem nach einer der vorhergehenden Ausführungsformen, dadurch gekennzeichnet, dass zum wahlweisen Verschließen mindestens einer Hydraulikhauptleitung (4, 5) ein Schaltventil (PD1) vorgesehen ist, und dass mindestens eine Hydraulikhauptleitung (4, 5) über ein zentrales Abführventil (ZAV) mit einem Vorratsbehältnis (VB), insbesondere zum Druckabbau im ABS-Betrieb in mindestens einer Komponente (RB1, RB2, RB3, RB4) und/oder beiden Bremskreisen (BK1, BK2), verbindbar ist, wobei die Druckerzeugung für die ABS-Funktion mittels einer einzigen Druckerzeugungseinrichtung (DV1, DV2) für beide Bremskreise (BK1, BK2) erfolgt, und dass die Druckerzeugung für die ABS-Funktion mittels einer einzigen für beide Bremskreise (BK1, BK2) oder jeweils einer Druckerzeugungseinrichtung (DV1, DV2) pro Bremskreis (BK1, BK2) erfolgt.
55. Bremssystem nach einer der vorhergehenden Ausführungsformen, dadurch gekennzeichnet, dass mindestens ein Drucksensor bzw. Druckgeber (DG, DG1, DG2) für einen Bremskreis (BK2) oder für beide Bremskreise (BK1, BK2) zusammen vorgesehen ist, insbesondere bevorzugt ein Druckgeber (DG) zur Ermittlung des Drucks in dem Bremskreis (BK2) vorgesehen ist, in dem die Druckerzeugung mittels einer kontinuierlich fördernden Pumpe (DV2) erfolgt.
56. Bremssystem nach Ausführungsform 58, dadurch gekennzeichnet, dass zum Druckabbau (p_{ab}) aus dem Druckniveau (P2) hin zum Druckniveau (P1) kann entweder eine Druckversorgungseinrichtung (DV1, DV2) verwendet werden oder aber über ein Abführventil (ZAV) erfolgen, und dass für den weiteren Druckabbau vom Druckniveau (P₁) auf das Druckniveau (P₀) die eine erste Druckversorgungseinrichtung (DV1) wirkt.
57. Bremssystem nach einer der vorhergehenden Ausführungsformen, dadurch gekennzeichnet, dass bei Ausfall einer Druckversorgungseinrichtung (DV1, DV2) zum Druckaufbau in Radbremsen (RB1-4) beider Bremskreise (BK1, BK2) die noch funktionstüchtige Druckversorgungseinrichtung wirkt, und dass ein Druckabbau (p_{ab}) in einem oder beiden Bremskreisen über das zentrale Abführventil (ZAV) und/oder über mindestens ein Abführventil (AV1, AV2), welches insbesondere zwischen dem Schaltventil (SV) und einem Verbindungsschaltventil (BP1, BP2) oder zwischen einer Radbremse (RB1-4) und dem zugehörigen Schaltventil (SV) angeordnet ist, erfolgt.
58. Bremssystem nach einer der vorhergehenden Ausführungsformen, dadurch gekennzeichnet, dass in einem Bremskreis (BK2), in dem eine kontinuierlich fördernde Pumpe (DV2) angeordnet ist, zwei Rückschlagventile (RV1, RV2) hintereinander geschaltet sind, wobei die die Rückschlagventile (RV1, RV2) miteinander verbindende Hydraulikleitung über eine Hydraulikleitung, in der eine Drossel (Dr) angeordnet ist, mit einem Vorratsbehältnis (VB) verbunden ist.
59. Bremssystem nach einer der vorhergehenden Ausführungsformen, dadurch gekennzeichnet, dass eine Druckversorgungseinrichtung (DV1) mit einem elektromotorisch angetriebenen Kolben (Ko) vier Dichtungen (D4, D5, D6, D7) vorgesehen sind, zwischen denen jeweils in dem Zylinderinnenraum endende Kanäle angeordnet sind, wobei der eine erste Kanal über ein Rückschlagventil (RV) mit einem Vorratsbehältnis (VB) verbunden ist, und der zweite und der dritte Kanal über eine Hydraulikleitung mit darin angeordneter Drossel (Dr) miteinander in Verbindung sind, und dass der dritte Kanal ebenfalls über eine Hydraulikleitung mit dem Vorratsbehälter (VB) verbunden ist.
60. Bremssystem nach einer der vorhergehenden Ausführungsformen, dadurch gekennzeichnet, dass bei der ABS-Funktion der Druckaufbau (p_{auf}) entweder nur mittels einer Druckversorgungseinrichtung (DV1, DV2) oder mittels beiden Druckversorgungseinrichtungen (DV1, DV2) geschieht, wobei der Druckaufbau gleichzeitig oder abwechselnd in den Bremskreisen (BK1, BK2) erfolgt.
61. Bremssystem nach Ausführungsform 64, dadurch gekennzeichnet, dass bei der ABS-Funktion der Druckaufbau (p_{auf}) mit nur einer Druckversorgungseinrichtung (DV1) gleichzeitig oder abwechselnd in einem oder beiden Bremskreisen (BK1, BK2) mittels der Verbindungsschaltventile (BP1, BP2) erfolgt.
62. Bremssystem nach einer der vorhergehenden Ausführungsformen, dadurch gekennzeichnet, dass bei der ABS-Funktion der Druckabbau (P_{ab}) in einem oder beiden Bremskreisen (BK1, BK2) entweder
   - über eine Druckversorgung (DV1) oder
   - das zentrale Abführventil (ZAV) oder
   - über mindestens ein Abführventil (AV1, AV2), welches insbesondere zwischen dem Schaltventil (SV) und einem Verbindungsschaltventil (BP1, BP2) oder zwischen einer Radbremse (RB1-4), insbesondere einer Vorderradbremse, und dem zugehörigen Schaltventil (SV) angeordnet ist,
   erfolgt.
63. Bremssystem nach einer der vorhergehenden Ausführungsformen, dadurch gekennzeichnet, dass die Kolben-Zylinder-Einheit (HZ) einen eigenen Vorratsbehälter (VB) aufweist.
64. Bremssystem nach Ausführungsform 67, dadurch gekennzeichnet, dass das Vorratsvolumen des Vorratsbehälters (VB) mittels der einen Druckversorgungseinrichtung (DV1) diagnostizierbar und veränderbar ist.
65. Bremssystem nach einer der vorhergehenden Ausführungsformen, dadurch gekennzeichnet, dass ein E-Pedal vorgesehen ist, und dessen Steuersignale Eingangssignale für die elektronische Steuer- und Regeleinheit (ECU) des Hydrauliksystems, die insbesondere teil- oder vollredundant mit zwei Versorgungsanschlüssen ausgebildet ist, sind.
66. Bremssystem nach einer der vorhergehenden Ausführungsformen, dadurch gekennzeichnet, dass mindestens eine Druckversorgungseinrichtung (DV1, DV2) zum Druckaufbau oder Druckregelung in einer Parkierbremse (EPB) dient.
67. Bremssystem nach einer der vorhergehenden Ausführungsformen, dadurch gekennzeichnet, dass mindestens eine elektromotorisch angetriebene Parkbremse (EPB) unterstützend beim Druckaufbau, insbesondere bei der Druckregelung der ABS-Funktion, mitwirkt.
68. Bremssystem nach einer der vorhergehenden Ausführungsformen, dadurch gekennzeichnet, dass dem Ventil (FV) ein weiteres Schaltventil (FVr) parallelgeschaltet ist, wobei die Aus- und Eingänge der Ventile (FV, FVr) vertauscht zueinander an die Leitung (3) angeschlossen sind.
69. Bremssystem nach einer der vorhergehenden Ausführungsformen, dadurch gekennzeichnet, dass mindestens ein Verbindungsventil (BP1, BP2) und/oder Schaltventil (SV) zum geregelten Druckabbau in einer Radbremse (RB) und/oder einem Bremskreis (BK1, BK2) mittels Puls-Weiten-Modulation angesteuert bzw. betrieben wird.
70. Bremssystem nach Ausführungsform 69, dadurch gekennzeichnet, dass für die Druckabbauphase das zentrale Auslassventil (ZAV) dauerhaft geöffnet ist.
71. Bremssystem nach einer der Ausführungsformen 69 oder 70, dadurch gekennzeichnet, dass zur Regelung des Druckabbaus in einer Radbremse (RB) das zugehörige Schaltventil (SV) mittels Puls-Weiten-Modulation angesteuert bzw. betrieben wird, wobei sowohl das zwischen zentralem Auslassventil (ZAV) und dem Schaltventil (SV) angeordnete Verbindungsventil (BP1, BP2) als auch das zentrale Auslassventil (ZAV) zumindest für die Dauer des Druckabbaus in der Radbremse (RB) dauerhaft geöffnet sind.
72. Bremssystem nach einer der Ausführungsformen 69 oder 70, dadurch gekennzeichnet, dass zur Regelung des Druckabbaus in einer Radbremse (RB) das zugehörige Schaltventil (SV) sowie das zentrale Auslassventil (ZAV) für die Dauer des Druckabbaus in der Radbremse (RB) dauerhaft geöffnet sind, und dass das zwischen dem zentralen Auslassventil (ZAV) und dem Schaltventil (SV) angeordnete Verbindungsventil (BP1, BP2) mittels Puls-Weiten-Modulation angesteuert bzw. betrieben wird.
73. Bremssystem nach einer der vorhergehenden Ausführungsformen, dadurch gekennzeichnet, dass während des Druckabbaus in einer Radbremse bzw. einem Bremskreis die Förderleistung der beim Normalbetrieb des Bremssystems dieser Radbremse bzw. Bremskreis zugeordnete Druckversorgungseinrichtung gestoppt oder reduziert ist.

## Patentansprüche

1. Bremssystem für ein Fahrzeug, umfassend:
zwei hydraulische Bremskreise (BK1, BK2), jeweils umfassend mindestens eine hydraulisch wirkende Radbremse (RB1, RB2, RB3, RB4),
eine erste Druckversorgungseinrichtung (DV1), derart angeordnet, um eine oder mehrere der Radbremsen mit Druck zu versorgen, wobei die erste Druckversorgungseinrichtung durch Hin- und Zurückbewegung eines Kolbens Druck in mindestens einem der beiden hydraulischen Bremskreisen (BK1, BK2) aufbauen bzw. abbauen kann,
eine zweite Druckversorgungseinrichtung (DV2) mit einer Pumpe mit kontinuierlicher Förderleistung in Form einer Kolbenpumpe, Zahnradpumpe oder Exzenterkolbenpumpe, die von einem Elektromotor angetrieben wird und die derart angeordnet ist, dass sie Druck in mindestens einem der beiden hydraulischen Bremskreisen (BK1, BK2) aufbauen kann,
mindestens eine Ventilanordnung mit Ventilen zur radspezifischen Einstellung der Bremsdrücke und/oder zur Trennung der Radbremsen von oder zum Anschluss der Radbremsen an mindestens eine der ersten oder zweiten Druckversorgungseinrichtungen (DV1, DV2),
mindestens eine elektronische Steuer- und Regelungseinheit (ECU),
eine hydraulische Verbindungsleitung (VLa), derart angeordnet, dass sie die beiden Bremskreise verbindet, und
entweder:
ein elektrisches Bremspedal (P - Fig. 5) mit einem Wegsimulator (WS - Fig. 5) und mit Fahreranforderungserkennung unter Verwendung eines oder mehrerer Sensoren und einer Sensor-Steuerelektronikeinheit (Sensor ECU),
oder:
eine Hauptbremskolben-Zylindereinheit (HZ), die durch ein Bremspedal (P) betätigt werden kann, wobei die Hauptbremskolben-Zylindereinheit nur einen Kolben und eine Druckkammer umfasst, wobei die eine Druckkammer mit einem Wegsimulator (WS) verbunden ist und über eine Hydraulikleitung (3) mit mindestens einem der beiden hydraulischen Bremskreise (BK1, BK2) verbindbar ist, und wobei mindestens ein schaltbares Ventil (FV) der mindestens einen Ventilanordnung derart angeordnet ist, dass die Hydraulikleitung abgesperrt werden kann,
wobei jeder Radbremse ein dediziertes Schaltventil (SV) der mindestens einen Ventilanordnung zugeordnet ist, und wobei jeder der beiden hydraulischen Bremskreise eine hydraulische Hauptleitung (4, 5) aufweist, über die die Schaltventile (SV) mit jeder der ersten und zweiten Druckversorgungseinrichtungen (DV1, DV2) verbindbar sind,
wobei mindestens ein Auslassventil (ZAV, AV, AV1, AV2) der mindestens einen Ventilanordnung zur Druckreduzierung durch Ableitung in ein Reservoir (VB) vorgesehen ist, und
wobei die erste Druckversorgungseinrichtung (DV1), die zweite Druckversorgungseinrichtung (DV2) und die mindestens eine Ventilanordnung in einem Gehäuse angeordnet sind, wobei das Gehäuse weiterhin an der mindestens einen elektronischen Steuer- und Regelungseinheit (ECU) befestigt ist,
wobei die mindestens eine elektronische Steuer- und Regelungseinheit (ECU) einen redundanten Bordnetzanschluss aufweist.

2. Bremssystem nach Anspruch 1, wobei die erste Druckversorgungseinrichtung (DV1) und die zweite Druckversorgungseinrichtung (DV2) mit Stromversorgungen unterschiedlicher Spannungen betrieben werden.

3. Bremssystem nach Anspruch 1 oder 2, wobei die erste Druckversorgungseinrichtung (DV1) mit 48V Stromversorgung betrieben wird.

4. Bremssystem nach einem der vorhergehenden Ansprüche, wobei die zweite Druckversorgungseinrichtung (DV2) mit einer Stromversorgung von weniger als 48V betrieben wird.

5. Bremssystem nach Anspruch 4, wobei die zweite Druckversorgungseinrichtung (DV2) mit einer Stromversorgung von 12V oder 24V betrieben wird.

6. Bremssystem nach einem der Ansprüche 1-3, wobei die zweite Druckversorgungseinrichtung (DV2) mit einer Stromversorgung von 48V betrieben wird.

7. Bremssystem nach einem der vorhergehenden Ansprüche, wobei die erste Druckversorgungseinrichtung (DV1) und die zweite Druckversorgungseinrichtung (DV2) für unterschiedliche maximale Drücke oder Druckniveaus ausgelegt sind.

8. Bremssystem nach einem der vorhergehenden Ansprüche, wobei die erste Druckversorgungseinrichtung (DV1) und die zweite Druckversorgungseinrichtung (DV2) durch ein schaltbares Ventil (BP1, BP2), der mindestens einen Ventilanordnung, in der hydraulischen Verbindungsleitung trennbar sind.
